# EUROPEAN PATENT APPLICATION

(11) **EP 4 636 388 A1**
(43) Date of publication of application: **22.10.2025**
(21) Application number: 24170486.5
(22) Date of filing: 16.04.2024
(51) Int. Cl.: G01N 21/05, G01N 21/53, G01N 21/47, G01N 21/51

(54) **SINGLE-USE FLOW CELL, DETECTION DEVICE, ELECTRONICS DEVICE AND SYSTEM FOR THE USE IN A MULTIANGLE LIGHT SCATTERING MEASUREMENT**

(71) Applicant: Sartorius Stedim Biotech GmbH, 37079 Göttingen (DE)
(72) Inventor: GRIMM, Dr. Christian, 37079 Goettingen (DE); SCHOLZ, Dr. Jochen, 37079 Goettingen (DE); HOEHSE, Dr. Marek, 37079 Goettingen (DE)
(74) Representative: Cohausz & Florack

(57) **Abstract**

The present invention relates to a single-use flow cell (1) for the use in a multiangle light scattering measurement, comprising: a flow cell body (2), and a flow path (3) for passing a sample through the single-use flow cell (1), wherein the flow path (3) is provided at least in sections in the flow cell body (2). In order to provide a single-use flow cell (1) for the use in a multiangle light scattering measurement which can be easily produced it is provided that the single-use flow cell (1) is manufactured at least in sections by cold casting, injection molding, machining and/or additive manufacturing of an optical transparent material. The present invention also relates to a detection device (17), an electronics device (19) and a system (15) for the use in a multiangle light scattering measurement.

## Description

The present invention relates to a single-use flow cell for the use in a multiangle light scattering measurement, comprising: a flow cell body, and a flow path for passing a sample through the single-use flow cell, wherein the flow path is provided at least in sections in the flow cell body.

The present invention further relates to a detection device for the detection of scattered radiation of a multiangle light scattering measurement, comprising: a detection unit for the detection of scattered radiation of a multiangle light scattering measurement, preferably comprising at least one detector for the detection of scattered radiation of a multiangle light scattering measurement, and a flow cell section for the interaction, in particular reception, of at least one flow cell.

The present invention further relates to an electronics device for the use in a multiangle light scattering measurement comprising: a power supply unit for supplying power to at least one detection device for the use in a multiangle light scattering measurement, a control unit for controlling at least one detection device for the use in a multiangle light scattering measurement, preferably for controlling at least one radiation element and/or at least one detector of a detection device for the use in a multiangle light scattering measurement, and at least one transfer interface, preferably at least one transfer connection element, for transferring power and/or at least one control signal to at least one detection device for the use in a multiangle light scattering measurement.

The present invention further relates to a system for the use in, in particular for performing, a multiangle light scattering measurement, comprising: at least one flow cell for the use in a multiangle light scattering measurement, in particular at least one single-use flow cell according to anyone of claims 1 to 9, at least one detection device for the detection of scattered radiation of a multiangle light scattering measurement, in particular at least one detection device according to anyone of claims 10 to 12, and/or at least one electronics device for the use in a multiangle light scattering measurement, in particular at least one electronics device according to anyone of claims 13 to 14.

Multi angle light scattering (MALS) is a statical light scattering technique which measures angular variation of scattered light from a solute in a solution. A MALS system requires an optical flow cell assembly comprising a flow cell for light scattering measurements. In a MALS system typically a sample solution enters into a flow cell and is illuminated by a laser. When the solute interacts with light, a small amount of the light is scattered into new directions while most of the light continues in its original direction. The MALS system than measures the intensity of the scattered light around the flow cell at different scattering angles with photodetectors as a function of angle over a time scale in seconds while the sample flows through the flow cell. The scattered light yields biophysical information of the solute in terms of molar mass and radius of gyration (mass-averaged radius).

Currently reusable flow cells are used which require labor intensive delicate manual cleaning steps and time and bear the risk of cross contamination and clogging due to long term usage. To perform certain maintenance (e.g. flow cell cleaning, replacement of tubing), it is first necessary to remove the flow cell from the instrument in which it is housed and detach the connected tubing. This process requires some expertise and caution and is not very suitable for process applications. Also, the instrument and flow cell can be damaged due to the applied cleaning process, unproper cleaning and cleaning agent can leave contaminants such as fingerprints, residues and particulates on the optical surface of the flow cell, which negatively affect measurement quality and provide misleading information about the measured parameter. A malfunctioning flow cell thus significantly disrupts the workflow and the process being monitored.

Moreover, current MALS systems in the market are designed for lab scale experiments and integrations, such as high-performance liquid chromatography (HPLC). Thus, the instruments, i.e. parts, of a MALS systems are coupled with lab scale purification columns or microfluidic systems so far. All these instruments come as a closed box system which houses among other things a radiation source, in particular a laser source, a power source, a flow cell, and photodetectors with electronic units. The instruments are integrated with these lab scale units with external lab scale tubing due to the current instrument configuration and design. Therefore, either a small bypass is generated or only very small volumes of a solute are analyzed with a benchtop lab device. However, this type of instrument set-up does not enable in-line larger scale integrations so that this setup-up hinders this technique to be used for process development and the scale-up at larger scale. Moreover, this type of instrument set-up, in particular due to the usual closed box system, is not well adapted for the use of single-use flow cells.

Against this background, it is an object of the present invention to provide a single-use flow cell for the use in a multiangle light scattering measurement which can be easily produced. Moreover, it is an object of the present invention to provide a detection device, an electronics device and a system for the use in a multiangle light scattering measurement which can be used for larger scale in-line integrations and can be used with single-use flow cells.

The object named above is solved in accordance with the present invention by a single-use flow cell according to the preamble of claim 1 in that the single-use flow cell is manufactured at least in sections by cold casting, injection molding, machining and/or additive manufacturing of an optical transparent material.

Various embodiments of the single-use flow cell, the detection device, the electronics device and the system for the use in a multiangle light scattering measurement are described in the following. The individual embodiments are in each case individually applicable to the single-use flow cell, the detection device, the electronics device and the system for the use in a multiangle light scattering measurement. The individual embodiments may furthermore be combined with each other at will.

The single-use flow cell for the use in a multiangle light scattering measurement, comprises: a flow cell body and a flow path for passing a sample through the single-use flow cell, wherein the flow path is provided at least in sections in the flow cell body. This design allows for a continuous passing and analyzing, in particular by a multiangle light scattering measurement, of a sample passed through the single-use flow cell. The flow path can also be provided entirely in the flow cell body. This provides a compact single-use flow cell design. The flow path can be designed as a groove and/or channel. The cross section of the flow path can be at least in sections, preferably continuously, round and/or rectangular. The sample passed through the single-use flow cell is advantageously a pourable medium.

In addition, it is provided that the single-use flow cell is manufactured at least in sections by cold casting, injection molding, machining and/or additive manufacturing of an optical transparent material. In this way the single use flow cell can be easily and cost-effectively produced in large quantities. This in particular allows the flow cell to be used as a single-use flow cell. The optical transparent material does not need to be optical transparent before the manufacturing of the single-use flow cell. It is, however, relevant that the optical transparent material is optical transparent after the manufacturing of the single-use flow cell. The flow cell body is, preferably, manufactured at least in sections by cold casting, injection molding, machining and/or additive manufacturing of an optical transparent material. Moreover, the single-use flow cell, preferably the flow cell body, is advantageously manufactured predominantly, preferably entirely, by cold casting, injection molding, machining and/or additive manufacturing of an optical transparent material.

The manufacturing by cold casting preferably comprises pouring the optical transparent material, preferably as a casting compound, into a mold at room temperature, then curing the optical transparent material and thermally treating the cured optical transparent material. The optical transparent material used for cold casting is preferably a silicon-containing casting compound and/or the material used for cold casting preferably comprises quartz and/or SiO₂. Moreover, during the thermal treatment of the cured optical transparent material the optical transparent material is converted to, preferably pure, quartz glass (also called fused silica or fused quartz) and/or to a monolithic structure.

The single-use flow cell can also be sterile, preferably due to a sterilization by ionizing electromagnetic irradiation, in particular gamma irradiation and/or X-ray irradiation. This simplifies the immediate use of the single-use flow cell in any area of application.

In the present disclosure the term "single-use" refers to a flow cell that is configured to be replaced or discarded after each use, and that is not intended to be re-used.

Moreover, in the present disclosure the term "multiangle light scattering measurement" comprises multiangle light scattering (MALS) as well as multiangle laser light scattering (MALLS).

In an embodiment of the single-use flow cell it is provided that the optical transparent material comprises quartz glass, at least one polymer and/or plastic and/or in that the optical transparent material is optical transparent for electromagnetic radiation with a wavelength of at least 200 nm, preferably at least 400 nm, in particular at least 600 nm and/or at most 1100 nm, preferably at most 1000 nm, in particular at most 900 nm. This simplifies the passing of the radiation used for multiangle light scattering measurement through the single-use flow cell towards the sample to be analyzed. The usage of quartz glass, at least one polymer and/or plastic in addition simplifies the manufacturing of the single-use flow cell as these materials are easy to handle and to process. Preferably the optical transparent material comprises predominantly quartz glass, at least one polymer and/or plastic, in particular consists of quartz glass, at least one polymer and/or plastic. Advantageously the quartz glass is a quartz glass produced by cold casting and/or the quartz glass predominantly comprises SiO₂, preferably consists of SiO₂. With respect to the already described maximum wavelengths for which the optical transparent material is optical transparent for electromagnetic radiation it can alternatively or in addition be provided that the optical transparent material is optical transparent for electromagnetic radiation with a wavelength of at most 800 nm, preferably at most 700 nm, more preferably at most 600 nm, more preferably at most 500 nm, in particular at most 400 nm. The optical transparent material can advantageously be optical transparent for electromagnetic radiation in the range of at least 200 nm to at most 400 nm and/or at least 600 nm to at most 900 nm. This simplifies the passing of the radiation used for multiangle light scattering measurement through the single-use flow cell towards the sample to be analyzed.

In an embodiment of the single-use flow cell it is provided that the flow cell body, in particular the outer surface of the flow cell body, comprises a plurality of side walls, preferably at least four side walls, in particular at least six side walls, and in that, preferably, at least two of the side walls, in particular in each case at least two of the side walls, are arranged opposite to each other, the side walls are arranged successively one after the other and/or the side walls are arranged around a common axis. This allows for an easier production of the single-use flow cell, in particular of a single-use flow cell with an arc-shaped contour, as the production of one continuous, in particular curved, side wall having the required optical properties is more difficult than to produce a plurality of smaller side walls having the required optical properties. Alternative or in addition adjoining side walls are arranged obliquely to each other. Due to the plurality of side walls the flow cell body can have a polygonal cross-section, preferably square, hexagonal an/or octagonal cross-section. The plurality of side walls can in each case have at least in sections a flat surface, preferably can have a continuously flat surface. This further simplifies the production of side walls with the required optical properties as the side walls can be machined, preferably milled and/or polished, more easily. The flow cell body can also comprise at least one bottom wall and/or at least one top wall, wherein, preferably, the bottom wall and/or the top wall are arranged opposite to each other. When the side walls are arranged successively one after the other advantageously at least two side walls are adjoining each other in each case. The common axis can be situated in the flow cell body and/or the side walls can encircle the common axis. This simplifies providing a flow cell body with a convex and/or arc-shaped outer contour at least in sections. It is also advantageous if the at least two of the side walls, in particular in each case at least two of the side walls, arranged opposite to each other are arranged around the common axis. This simplifies providing a flow cell body with a convex and/or arc-shaped outer contour at least in sections.

The flow path can be arranged at least in sections, preferably entirely, parallel to the common axis and/or the flow path can extend at least in sections parallel to at least two, preferably to all of, the side walls. In this way excitation radiation provided on at least one, preferably flat, side wall can enter the side wall, preferably perpendicularly, interact substantially perpendicular with the sample in the flow path and exit the single-use flow cells especially via the plurality of sidewalls. Thus, the optical path of the excitation radiation can be provided in a simple manner at least in sections perpendicular to the flow path. Alternative or in addition the flow path can be arranged at least in sections, preferably entirely, oblique, preferably perpendicular, to the common axis, the flow path can extend through at least two side walls, preferably arranged opposite to each other, and/or the flow path can extend perpendicularly from at least one side wall, preferably at least two side walls. In this way excitation radiation provided on at least one, preferably flat, side wall can enter the side wall, preferably perpendicularly, can follow the flow path and interact along the flow path with the sample in the flow path and exit the single-use flow cells especially via the plurality of sidewalls. Thus, the optical path of the excitation radiation can be provided in a simple manner at least in section parallel to the flow path.

In alternative or in addition the flow cell body can comprise an even number of side walls. This also simplifies production, in particular when a portion of the sidewalls is arranged parallel to each other. Alternatively, the flow cell body can comprise an odd number of side walls. This increases the probability that scattered radiation impinges a sidewall at a right angle, in particular when the excitation radiation impinges the flow cell at a right angle when entering the flow cell.

In the present disclosure the term "excitation radiation" refers to the radiation emitted by a radiation source used for a multiangle light scattering measurement. In particular the excitation radiation is intended to interact with, preferably collide with and/or to be scattered by, a sample to be analyzed by a multiangle light scattering measurement.

In an embodiment of the single-use flow cell it is provided that at least two of the oppositely arranged side walls, in particular all of the oppositely arranged side walls, are respectively arranged obliquely and/or at least in pairs parallel to each other. An oblique arrangement, in particular when a plurality of sidewalls are provided, simplifies among other things that excitation radiation, which was scattered at the sample to be analyzed, impinges a respective sidewall perpendicularly as it exits the single-use flow cell. This reduces the influence of the single-use flow cell on the radiation exiting the single-use flow cell, in particular as further scattering and/or refraction of the radiation is reduced, thus leading to improved analysis results by the multiangle light scattering measurement. A parallel arrangement simplifies among other things the manufacturing of the single-use flow cell, as two parallel side walls can be easily manufactured simultaneously. Advantageously, preferably exactly, two of the oppositely arranged side walls are in each case arranged obliquely and/or parallel to each other.

In an embodiment of the single-use flow cell it is provided that at least two, preferably at least three, further preferably at least four, further preferably at least five, in particular at least six, of the side walls are arranged at least eighth-circular-shaped, preferably quadrant-shaped, further preferably at least semicircular-shaped, in particular circular-shaped relative to each other and, preferably, around the common axis. This allows for a single-use flow cell with an at least partially arc-shaped contour while at the same time the single-use flow cell does not necessarily have to have a continuously arc-shaped side wall in the respective section of the flow cell. This reduces the influence of the geometry of the single-use flow cell on the radiation exiting the single-use flow cell, as the probability increases that scattered radiation impinges a sidewall perpendicularly when exiting the single-use flow cell while at the same time being easier to produce than a continuously arc-shaped sidewall.

In an embodiment of the single-use flow cell it is provided that the flow cell body comprises a first flow cell body part and a second flow cell body part and in that, preferably, the flow path is formed between the first flow cell body part and the second flow cell body part and/or the first flow cell body part and the second flow cell body part are connected, in particular bonded, to each other. By providing multiple flow cell body parts production of the single-use flow cell can be simplified, in particular for more complex geometries of the flow cell body and/or the flow path. A flow path with a complex, for example curved, geometry can then be created after casting or molding the flow cell body or the flow cell body parts. The provision of multiple flow cell body parts also has the effect that different parts of the single-use flow cell can be produced from different materials or with different production methods, providing different sections of the single-use flow cell with differing properties where needed. The flow path can be provided, preferably exclusively, in the first flow cell body part and/or the second flow cell body part. The provision in both flow cell body parts simplifies the production of a single use-flow cell with symmetrical or identical flow cell body parts. By providing the flow path, preferably exclusively, in either the first flow cell body part or the second flow cell body part a more complex design or additional machining for at least one flow cell body part can be dispensed with if necessary. The first flow cell body part and the second flow cell body part can be bonded to each other, for example with an adhesive and/or through thermal bonding. This enables stable and structurally simple connections to be provided.

In an embodiment of the single-use flow cell it is provided that the flow cell body, in particular the first flow cell body part and/or the second flow cell body part, is at least in sections designed to not allow for the detection of scattered radiation of a multiangle light scattering measurement through the flow cell body, in particular through the respective flow cell body part. In this way it can be prevented that scattered radiation reaches areas where the scattered radiation is not intended to be and could have a negative influence on nearby devices or workers. To not allow for the detection of scattered radiation the flow cell body, in particular the first flow cell body part and/or the second flow cell body part, can be designed to be at least in sections impervious for electromagnetic radiation with a wave length of at least 200 nm, preferably at least 400 nm, in particular at least 600 nm and/or at most 1100 nm, preferably at most 1000 nm, in particular at most 900 nm. Alternative or in addition the surface geometry of the first flow cell body part and/or the second flow cell body part can be designed in a radiation-absorbing manner.

In the present disclosure the term "scattered radiation" describes the radiation, preferably excitation radiation, used for a multiangle light scattering measurement which was scattered by the sample to be analyzed by the multiangle light scattering measurement.

In an embodiment of the single-use flow cell it is provided that the flow cell body, in particular the first flow cell body part and/or the second flow cell body part, is at least in sections at least eighth-cylindrical-shaped, preferably quarter-cylindrical-shaped, further preferably at least semi-cylindrical-shaped, in particular cylindrical-shaped, and, preferably comprises at least on cylinder axis, and/or in that the flow cell body, in particular the first flow cell body part and/or the second flow cell body part, is at least in sections, preferably completely, polyhedral-shaped. By the least partial cylindrical shape it can be ensured that scattered radiation impinges a wall, preferably sidewall, of the flow cell body perpendicularly as it exits the single-use flow cell, thus reducing the influence of the geometry of the single-use flow cell on the scattered radiation exiting the single-use flow cell. By providing a polyhedral shape, the production of the single-use flow cell can be simplified as flat surfaces are easier to machine. By combining an at least partial cylindrical-shaped section and a polyhedral-shaped section both effects can be combined. The at least partially cylindrical-shaped section can then be provided in the areas of the single-use flow cell where the scattered radiation is intended to be detected by a detector and the polyhedral-shaped sections can be provided in the areas where a detection is not intended or where the excitation radiation only enters the single-use flow cell. It is preferably provided that the outer surface of the flow cell body, in particular the outer surface of the first flow cell body part and/or the second flow cell body part, is at least in sections at least eighth-cylindrical-shaped, preferably quarter-cylindrical-shaped, further preferably at least semi-cylindrical-shaped, in particular cylindrical-shaped, and/or in that the outer surface of the flow cell body, in particular the outer surface of the first flow cell body part and/or the second flow cell body part, is at least in sections, preferably completely, polyhedral-shaped. The outer surface preferably does not comprise the surface of the flow path intended for contact with the sample to be passed through the single-use flow cell. The cylinder axis is the cylinder axis of the section of the flow cell body, in particular the section of the first flow cell body part and/or the second flow cell body part, that is at least in sections at least eighth-cylindrical-shaped, preferably quarter-cylindrical-shaped, further preferably at least semi-cylindrical-shaped, in particular cylindrical-shaped.

The flow path can be arranged at least in sections, preferably entirely, parallel to the at least one cylinder axis. In this way excitation radiation which interacted with the flow path at a right angle can exit the single-use flow cell via the cylindrically shaped section of the single-use flow cell at a right angle, reducing the influence of the geometry of the flow cell on the scattered radiation and thus on the measurement results. Alternative or in addition the flow path can be arranged at least in sections, preferably entirely, oblique, preferably perpendicular, to the at least one cylinder axis. In this way excitation radiation can follow the flow path and interact along the flow path with the sample in the flow path. Depending on the design it is at the same time possible that the scattered radiation can exit the single-use flow cells via the cylindrically shaped section of the flow cell at a right angle, thus reducing the influence of the geometry of the flow cell on the scattered radiation and thus on the measurement results.

In an embodiment of the single-use flow cell it is provided that the flow cell body comprises a third flow cell body part and in that, preferably, the flow path is formed at least in sections inside the third flow cell body part and/or the third flow cell body is arranged, in particular bonded, at least in sections inside the flow cell body, preferably between the first flow cell body part and the second flow cell body. This on the one hand simplifies the manufacturing of the flow path while at the same time more complex geometries of the flow path, for example a curved flow path, can be created. For example, a flow path with an arbitrary geometry can be inserted into the flow cell body after the machining of the remaining flow cell body parts by arranging the third flow cell body part between the remaining flow cell body parts. Moreover, the section surrounding the flow path can be produced from a different material than the rest of the flow cell body thus providing different sections of the single-use flow cell with differing properties where needed.

In an embodiment of the single-use flow cell it is provided that an adhesive used to bond the first flow cell body part and the second flow cell body part to each other and/or an adhesive used to bond the third flow cell body part at least in sections inside the flow cell body, preferably between the first flow cell body part and the second flow cell body part, is configured as an index-matching material with regards to the flow cell body, in particular the first flow cell body part, the second flow cell body part and/or the third flow cell body part. In this way the influence of the adhesive used for bonding different flow cell body parts on the excitation radiation or scattered radiation is kept at a minimum so that the adhesive does not substantially or even at all influence the multiangle light scattering measurement. The configuration of the respective adhesive as an index-matching material can be based on the geometry of, surface properties of, preferably roughness of, gap width between and/or material of the flow cell body, in particular the first flow cell body part, the second flow cell body part and/or the third flow cell body part.

In an embodiment of the single-use flow cell it is provided that the flow path has a fluid inlet and a fluid outlet in fluid communication with each other, in that the flow path is at least in sections designed as a channel, in that the flow path is at least in sections bent, in particular at least in sections extends in a U-shape, and/or in that at least in sections, preferably continuously, the cross-section shape of the flow path is rectangular and/or round, in particular circular or U-shaped. This provides a flow path adapted to the requirements of a multiangle light scattering measurement. By providing a bent, in particular U-shaped, flow path a section of the flow path can be brought closer to a side and/or surface of the single-use flow cell intended for the excitation radiation to enter. Moreover, by providing a U-shaped flow path, the shape of the flow path can form an incoupling window for the excitation radition. Alternative or in addition the third flow cell body part can be designed at least in sections, preferably entirely, as a capillary.

In an embodiment of the single-use flow cell it is provided that the flow path is formed at least in sections by a first flow path element of the flow cell body, wherein preferably the first flow path element is a groove or a flat surface section, and at least in sections by a second flow path element of the flow cell body, wherein preferably the second flow path element is a groove or a flat surface section, and in that, preferably, the first flow path element and the second flow path element adjoin each other and/or are arranged opposite to each other. In this way the flow path can be provided in a simple way in terms of design and manufacturing. In particular when a groove is only provided in either the first flow path element or the second flow path element, manufacturing can be simplified as for the other flow path element a groove does not need to be provided. The cross section of the groove of the first flow path element and/or the second flow path element can be at least in sections, preferably continuously, round and/or rectangular. The flat surface section of the first flow path element and/or the second flow path element can be formed by wall of the first flow cell body part, the second flow cell body part and/or the third flow cell body part and wherein, preferably, the wall is used to connect the first flow cell body part, the second flow cell body part and/or the third flow cell body part with each other and/or the wall is at least adjacent to the flow path, preferably continuously, flat.

In an embodiment of the single-use flow cell it is provided that the flow cell body, in particular the outer surface of the flow cell body, comprises an excitation radiation entry section for the entry of excitation radiation used for a multiangle light scattering measurement and/or an excitation radiation exit section for the exit of excitation radiation used for a multiangle light scattering measurement and in that, preferably, an excitation radiation direction is defined between the excitation radiation entry section and the excitation radiation exit section. The excitation radiation entry section is intended for the entry of excitation radiation into the single-use flow cell and/or the excitation radiation exit section is intended for the exit of excitation radiation out of the single-use flow cell. Advantageously, the excitation radiation exit section is intended for the exit of the portion of the excitation radiation which was not scattered by the sample passed through the single-use flow cell. The radiation entry section and/or the radiation exit entry are preferably polished.

In an embodiment of the single-use flow cell it is provided that the flow path and the excitation radiation direction, the common axis and/or the cylinder axis at least in sections, in particular when adjoining and/or intersecting each other, run oblique and/or substantially parallel to each other. Alternative or in addition the flow path and the excitation radiation direction, the common axis and/or the cylinder axis at least in sections, in particular when adjoining and/or intersecting each other, can run perpendicular to each other. When the flow path and the excitation radiation direction run obliquely with respect to each other, the excitation radiation can cross obliquely and interact with the sample in the flow path. When the flow path and the excitation radiation direction run parallel with respect to each other, the excitation radiation can follow the flow path and interact along the flow path with the sample in the flow path. When the flow path runs parallel to the common axis and/or the cylinder axis and the excitation radiation direction runs obliquely to the flow path the scattered radiation can likely impinge an outer surface of the single-use flow cell perpendicularly and is thus not or not substantially influenced when exiting the single-use flow cell. This is also the case when the flow path runs obliquely to the common axis and/or the cylinder axis and the excitation radiation direction runs parallel to the flow path.

In an embodiment of the single-use flow cell it is provided that the flow cell body, in particular the outer surface of the flow cell body, comprises at least one detector coupling section for coupling, preferably via at least one optical fiber, at least one detector for the detection of scattered radiation of a multiangle light scattering measurement to the single-use flow cell and/or in that the flow cell body, in particular the outer surface of the flow cell body, comprises at least one radiation element coupling section for coupling, preferably via at least one optical fiber, at least one radiation element, in particular at least one radiation source, for providing excitation radiation for a multiangle light scattering measurement to the single-use flow cell. In this way dedicated areas are provided for coupling at least one detector and/or at least one radiation element. The flow cell body can comprise a plurality of detector coupling sections and/or a plurality of radiation element coupling sections. In this way the efficiency of a multiangle light scattering measurement can be increased. A radiation coupling element for coupling a radiation source for providing excitation radiation for a multiangle light scattering measurement to flow cell body, preferably comprising an optical fiber, can be provided at the radiation element coupling section and/or a detector coupling element for coupling a detector for the detection of scattered radiation of a multiangle light scattering measurement, preferably comprising an optical fiber, can be provided at the detector coupling section.

In an embodiment of the single-use flow cell it is provided that the flow cell body, in particular the outer surface of the flow cell body, is at least in sections polished and in that, preferably, the excitation radiation entry section, the excitation radiation exit section, the detector coupling section, the radiation element coupling section and/or at least one scattered radiation exit section for the exit of scattered radiation of a multiangle light scattering measurement is at least in sections polished. By polishing the respective surfaces and sections the influence on the radiation when traversing these surfaces and sections of the single-use flow cell is minimized. Preferably the polished section of the flow cell body, of the excitation radiation entry section, of the excitation radiation exit section, of the detector coupling section, of the radiation element coupling section and/or of the at least one scattered radiation exit section fulfills the requirement of at least λ/2, preferably at least λ/4, more preferably at least λ/8, in particular at least λ/20. λ/x Describes the flatness of a surface measured in fractions of a reference wavelength, preferably 632.8 nm. For example, a surface fulfilling λ/20 will have a maximum peak to valley deviation of 632.8 nm/20 or 31.64nm.

In an embodiment of the single-use flow cell it is provided that the single-use flow cell comprises an adjustment element for adjusting the position and/or orientation of the single-use flow cell. In this way the single-use flow cell can be adjusted easily with regard to a detector and/or radiation source used for a multiangle light scattering measurement, thus improving the accuracy of respective measurement.

The object named above is further solved in accordance with the present invention by a detection device according to claim 10.

The detection device for the detection of scattered radiation of a multiangle light scattering measurement comprises: a detection unit for the detection of scattered radiation of a multiangle light scattering measurement, preferably comprising at least one detector for the detection of scattered radiation of a multiangle light scattering measurement. Based on the information gathered by the detection unit, in particular detector, the absolute molar mass and/or the average size of molecules in the sample can for example be determined. The detection unit can comprise alternative or in addition to the detector at least one optical fiber to guide scattered radiation, preferably to a detector for the detection of scattered radiation of a multiangle light scattering measurement. In this way the detection device itself does not need to have a respective detector.

Moreover, the detection device comprises a flow cell section for the interaction, in particular reception, of at least one flow cell. In this way a flow cell can be positioned precisely in the detection device, thus ensuring an accurate multiangle light scattering measurement. The flow cell section can comprise a recess to receive at least in sections at least one flow cell. This provides a positive fit, thus further improving a precise positioning of a flow cell.

Furthermore, the detection device comprises a power interface, in particular a power connection element, for the connection to an external power supply unit. The detection device is thus designed to cooperate with an external power supply, i.e. a power supply not forming part of the detection device. This allows the detection device to be more compact. Thus, the detection device can also be integrated more easily in an in-line larger scale process. Moreover, due to the compact design a multiangle light scattering measurement system can be more easily provided as multiple separate sub systems instead of an all-encompassing closed box system. This also simplifies it to use single use-flow cells which are replaced or discarded after each use and thus should be easily accessible in the system.

Alternative or in addition to the detection device comprising a power interface, in particular a power connection element, for the connection to an external power supply unit, it can be provided that the detection device does not comprise a power supply unit. This also allows for a compact design of the detection device.

In an embodiment of the detection device it is provided that the detection device comprises at least one radiation element for providing excitation radiation for a multiangle light scattering measurement. In this way excitation radiation used for a multiangle light scattering measurement can be precisely directed towards a flow cell in which a sample to be analyzed is passed through.

In addition, it can be provided that the radiation element comprises at least one radiation source, in particular at least one laser, and/or at least one optical fiber. By providing a radiation source in the detection device, the radiation source can be placed as close as possible to the sample to be analyzed thus reducing the risk that the excitation radiation is negatively influenced before reaching the flow cell.

Alternative or in addition the detection device comprises a radiation interface, in particular a radiation connection element, for the connection to an external radiation source, in particular external laser. By providing a radiation interface and/or an optical fiber a compact detection device can be provided as a radiation source within the detection device does not need to be provided. The radiation interface, preferably the radiation connection element, can comprise an optical fiber.

Alternative or in addition the detection device does not comprise a radiation source, in particular laser, for providing excitation radiation for a multiangle light scattering measurement. In this way a compact detection device can be provided as no radiation source needs to be provided within the detection device to provide the radiation for a multiangle light scattering measurement.

Alternative or in addition the detection device can comprise a frame and/or housing, preferably for mounting and/or housing the detector, the radiation element and/or the power connection element. The detection device and/or the radiation element can be arranged adjacent to the flow cell section. Preferably the flow cell section is arranged between the detection device and the radiation element and/or the detection device is arranged on an opposite side of the flow cell section than the radiation element. This simplifies conducting a multiangle light scattering measurement. The detection device can comprise a connection unit for, preferably electrically, connecting the detector and the radiation element. Data and/or information can be transferred via the connection unit. This simplifies the construction of the detection device as an independent sub system of a multiangle light scattering measurement system.

In an embodiment of the detection device it is provided that the detection device comprises a control interface, in particular a control connection element, for the connection to an external control unit, in particular for controlling the radiation element and/or the detector. This simplifies a precise and accurate multiangle light scattering measurement. The control connection can comprise a connection cable for transferring data and/or at least one signal. The data and/or signal can comprise measurement parameters, for example timing, intensity, modulation frequency, phase and/or duration of the radiation, in particular excitation radiation, measurement results and/or communication settings with other devices and/or units.

Alternative or in addition it can be provided that detection device does not comprise a control unit, in particular for controlling the radiation element and/or the detector. In this way a compact detection device can be provided as no control unit needs to be provided within the detection device.

In an embodiment of the detection device it is provided that the flow cell section comprises at least one flow cell holder for the, preferably detachable, connection of a flow cell and/or in that the detection device comprises a flow cell and the flow cell is, preferably inseparably, connected to the detection device, in particular in the flow cell section. By providing a flow cell holder a flow cell can be positioned accurately in the detection device, thus ensuring an accurate and precise multiangle light scattering measurement. The detachable configuration in particular simplifies the usage of single-use flow cells, as the change of flow cells can be carried out easily. By providing the detection device with a preferably inseparable flow cell, the detection device can be formed as a single-use multiangle light scattering measurement sub system. This simplifies the use of the detection device and the flow cell for the user, as the risk of misalignment of the detector device with respect to the flow cell is reduced as these parts can come pre-aligned and pre-assembled. The flow cell holder can comprise a recess to receive and hold at least in sections at least one flow cell. This provides a positive fit further improving a precise positioning of a flow cell in the detection device. The flow cell can be a single-use flow cell according to anyone of claims 1 to 9 and/or clauses 1 to 17.

In an embodiment of the detection device it is provided that the detection device, preferably the detection unit, comprises a plurality of detectors and in that the plurality of detectors are arranged at least quadrant-shaped, preferably at least semicircular-shaped, in particular circular-shaped, around the flow cell section and/or the flow cell. In this way it is constructively simplified to detect scattered radiation being scattered at a plurality of angles from the sample in the flow cell. In particular radiation scattered at low angles can be adequately detected in this way.

In an embodiment of the detection device it is provided that the detection device comprises an adjustment element for adjusting the position and/or orientation of a flow cell, in particular a flow cell received in the detection device. In this way the flow cell can be adjusted easily with regard to a detector and/or radiation element, preferably radiation source, used for a multiangle light scattering measurement.

The object named above is further solved in accordance with the present invention by an electronics device according to claim 13.

The electronics device for the use in a multiangle light scattering measurement comprises: a power supply unit for supplying power to at least one detection device for the use in a multiangle light scattering measurement. As the power supply unit often takes up a relatively large amount of installation space, it is advantageous to provide the power supply unit in a sub-system of a multiangle light scattering measurement system. The provision of an electronics device itself as a sub-system also helps in reducing the size of other parts of a multiangle light scattering measurement system, in particular the detection device, in the immediate vicinity of the flow cell.

In addition, the electronics device comprises a control unit for controlling at least one detection device for the use in a multiangle light scattering measurement, preferably for controlling at least one radiation element and/or at least one detector for the use in a multiangle light scattering measurement. This further helps reducing the size of other parts of a multiangle light scattering measurement system, in particular the detection device, in the immediate vicinity of the flow cell. By providing a detector in the electronics device the multiangle light scattering measurement can be improved as an additional detector is provided and/or the size of other parts of a multiangle light scattering measurement system, in particular the detection device, in the immediate vicinity of the flow cell can be reduced as the detector does not need to be provided in the detection device itself. The detector is preferably a detector for the detection of scattered radiation of a multiangle light scattering measurement.

In addition, the electronics device comprises at least one transfer interface, preferably at least one transfer connection element, for transferring power and/or at least one control signal to at least one detection device for the use in a multiangle light scattering measurement. In this way power, signals and/or data can be transferred between different sub systems of a multiangle light scattering measurement system. The at least one transfer interface, preferably at least one transfer connection element, can comprise at least one transfer cable for transferring power, excitation radiation, at least one signal and/or data. The data and/or signal can comprise measurement parameters, for example timing, intensity, modulation frequency, phase and/or duration of the radiation, in particular excitation radiation, measurement results and/or communication settings with other devices and/or units.

The electronics device, preferably the transfer interface, can be designed to carry out multiplexing of control signals, data and/or radiation, preferably excitation radiation. Thus, it is not necessary to provide multiple transfer connection elements, in particular multiple transfer cables.

In an embodiment of the electronics device it is provided that the electronics device comprises at least one radiation element, preferably comprising at least one radiation source, for providing excitation radiation for a multiangle light scattering measurement and, preferably, the transfer interface, preferably the transfer connection element, is designed for transferring excitation radiation of the radiation element, preferably of the radiation source, to at least one detection device for the use in a multiangle light scattering measurement. In this way the excitation radiation needed for a multiangle light scattering measurement can be generated in the electronics device. This also helps in reducing the size of other parts of a multiangle light scattering measurement system, in particular the detection device, in the immediate vicinity of the flow cell. In this case the control unit can also be designed to control the radiation element, preferably radiation source. The radiation element, preferably radiation source, can be a laser.

Alternatively, the electronics device does not comprise a radiation element, in particular radiation source, for providing excitation radiation for a multiangle light scattering measurement. In this way the electronics device can be kept compact.

In an embodiment of the electronics device it is provided that the electronics device comprises a graphical user interface unit for displaying and/or receiving information, in particular information regarding the power supply unit, the control unit, the transfer interface, the radiation element, in particular radiation source, and/or the communication interface unit and/or in that the electronics device comprises a communication interface unit for receiving and/or transmitting information. This simplifies the operation of the electronics device and preferably the multiangle light scattering measurement system of which the electronics device is a part of. The information can comprise measurement parameters, for example timing, intensity, modulation frequency, phase and/or duration of the radiation, in particular excitation radiation, measurement results and/or communication settings with other devices and/or units.

In an embodiment of the electronics device it is provided that the electronics device comprises a data handling unit and/or in that the electronics device comprises a signal handling unit for handling, in particular receiving and/or processing, the signals of a detection device for the use in a multiangle light scattering measurement, in particular of at least one detector for the detection of scattered radiation of a multiangle light scattering measurement. In this way a quick processing of detected scattered radiation ca be provided. The signal can comprise information concerning the detected scattered radiation.

The object named above is further solved in accordance with the present invention by a system for the use in, in particular for performing, a multiangle light scattering measurement, according to claim 15.

The system for the use in, in particular for performing, a multiangle light scattering measurement, comprises: at least one flow cell for the use in a multiangle light scattering measurement, in particular at least one single-use flow cell according to anyone of claims 1 to 9 and/or anyone of clauses 1 to 17, at least one detection device for the detection of scattered radiation of a multiangle light scattering measurement, in particular at least one detection device according to anyone of claims 10 to 12 and/or anyone of clauses 18 to 23, and/or at least one electronics device for the use in a multiangle light scattering measurement, in particular at least one electronics device according to anyone of claims 13 to 14 and/or anyone of clauses 24 to 27. In this way a multiangle light scattering measurement system is provided which provides precise measurement results while at the same time being adapted for the use of single-use flow cells and/or for the use in an in-line larger scale process. The system can comprise a plurality of flow cells, preferably according to anyone of claims 1 to 9 and/or clauses 1 to 17, and/or a plurality of detection devices, preferably according to anyone of claims 10 to 12 and/or clauses 18 to 23. The flow cell, the detection device and/or the electronics device are advantageously separate devices. The system preferably corresponds to or is the multiangle light scattering measurement system described in the present disclosure.

In an embodiment of the system it is provided that the system comprises a frame, preferably having a grid structure comprising several grid sections, and in that the flow cell, the detection device and/or the electronics device is connectable to the frame, in particular receivable by at least one grid section of the grid structure. By providing a respective grid design the different components can be attached modularly and can be easily replaced by any similarly designed component. The flow cell, the detection device and/or the electronics device can be designed to be received in at least one, preferably exactly one, grid section. This further simplifies a modular attachment of different components. Preferably the flow cell, the detection device and/or the electronics device is connected to the frame, in particular received by at least one grid section of the grid structure. In order to fix the flow cell, the detection device and/or the electronics device to the frame, preferably the grid structure, the system can comprise at least one, preferably a plurality of, fixation elements. A power supply unit, preferably the power supply unit of the electronics device, can be designed to provide the frame and/or the devices connected to the frame with energy and/or power.

Alternative or in addition it can be provided that the flow cell, the detection device and/or the electronics device is separate from the frame, in particular the grid structure.

In an embodiment of the system it is provided that the flow cell, the detection device and/or the electronics device are, preferably in a detachable manner, connectable with each other and/or in that the system comprises at least one transfer element, in particular transfer cable, for transferring power, excitation radiation, at least one signal and/or data between the electronics device, the detection device, the flow cell and/or the frame, in particular the grid structure. In this way a multiangle light scattering measurement system can be more easily provided as separate sub systems instead of an all-encompassing closed box system. This simplifies the integration in an in-line larger scale process as well as the use of single use-flow cells which are replaced or discarded after each use and thus should therefore be easily accessible. The data and/or signal can comprise measurement parameters, for example timing, intensity, modulation frequency, phase and/or duration of the radiation, in particular excitation radiation, measurement results and/or communication settings with other devices and/or units.

In an embodiment of the system it is provided that the flow cell can be coupled, preferably via at least one optical fiber, to at least one detector for the detection of scattered radiation of a multiangle light scattering measurement of the detection device for transmitting scattered radiation of a multiangle light scattering measurement and/or in that the flow cell can be coupled, preferably via at least one optical fiber, to at least one radiation element, in particular at least one radiation source, for providing excitation radiation for a multiangle light scattering measurement of the detection device and/or the electronics device for transmitting excitation radiation used for a multiangle light scattering measurement. In this way it can be prevented that particulates or other external factors influence the scattered radiation before reaching the detector and/or the excitation radiation after leaving the radiation element. Preferably it is provided that the flow cell is coupled, preferably via at least one optical fiber, to at least one detector for the detection of scattered radiation of a multiangle light scattering measurement of the detection device for transmitting scattered radiation of a multiangle light scattering measurement and/or in that the flow cell is coupled, preferably via at least one optical fiber, to at least one radiation element, in particular at least one radiation source, for providing excitation radiation for a multiangle light scattering measurement of the detection device and/or the electronics device for transmitting excitation radiation used for a multiangle light scattering measurement.

In an embodiment of the system it is provided that the detector for the detection of scattered radiation of a multiangle light scattering measurement of the detection device is aligned with the direction of the surface normal of a side wall of the flow cell, preferably arranged opposite of the detector, and/or in that the plurality of detectors for the detection of scattered radiation of a multiangle light scattering measurement of the at least on detection device are arranged at least quadrant-shaped, preferably at least semicircular-shaped, in particular circular-shaped, relative to, in particular around, the flow cell. By aligning the detector with the direction of the surface normal of a side wall of the flow cell good measurement results can be achieved. If the detection device comprises a plurality of detectors, the plurality of detectors can be aligned with the direction of the surface normal of a respective side wall of the flow cell, preferably arranged opposite of the respective detector. The alignment of the detector or the plurality of detectors with the surface normal of a side wall of the flow cell is preferably a parallel alignment. By respectively arranging a plurality of detectors it can constructively be simplified to detect scattered radiation which is scattered at a plurality of angles from the sample in the flow cell. In particular radiation scattered at low angles can be adequately detected in this way.

In an embodiment of the system it is provided that the radiation element, preferably the radiation source, in particular the laser, of the detection device and/or electronics device defines a radiation direction, wherein along the radiation direction excitation radiation for a multiangle light scattering measurement is emitted and in that the radiation direction and the flow path at least in sections, in particular when adjoining and/or intersecting each other, run oblique and/or substantially parallel to each other.

In an embodiment of the system it is provided that the flow path of the flow cell is provided as a bypass line for a main line transporting a sample. In this way the system does not need to be designed to carry out a measurement on a main line. This allows for a compacter design of the system.

Embodiments of the disclosure are described with the following clauses:
1. Single-use flow cell (1) for the use in a multiangle light scattering measurement, comprising:
   - a flow cell body (2), and
   - a flow path (3) for passing a sample through the single-use flow cell (1),
   - wherein the flow path (3) is provided at least in sections in the flow cell body (2),
   **characterized in that**
   the single-use flow cell (1) is manufactured at least in sections by cold casting, injection molding, machining and/or additive manufacturing of an optical transparent material.
2. Single-use flow cell (1) according to clause 1,
   **characterized in that**
   the optical transparent material comprises quartz glass, at least one polymer and/or plastic and/or in that the optical transparent material is optical transparent for electromagnetic radiation with a wavelength of at least 200 nm, preferably at least 400 nm, in particular at least 600 nm and/or at most 1100 nm, preferably at most 1000 nm, in particular at most 900 nm.
3. Single-use flow cell (1) according to clause 1 or clause 2,
   **characterized in that**
   the flow cell body (2), in particular the outer surface of the flow cell body (2), comprises a plurality of side walls (8), preferably at least four side walls (8), in particular at least six side walls (8), and in that, preferably, at least two of the side walls (8), in particular in each case at least two of the side walls (8), are arranged opposite to each other, the side walls (8) are arranged successively one after the other and/or the side walls (8) are arranged around a common axis (CO).
4. Single-use flow cell (1) according to clause 3,
   **characterized in that**
   at least two of the oppositely arranged side walls (8), in particular all of the oppositely arranged side walls (8), are respectively arranged obliquely and/or at least in pairs parallel to each other.
5. Single-use flow cell (1) according to clause 3 or clause 4,
   **characterized in that**
   at least two, preferably at least three, further preferably at least four, further preferably at least five, in particular at least six, of the side walls (8) are arranged at least eighth-circular-shaped, preferably quadrant-shaped, further preferably at least semicircular-shaped, in particular circular-shaped relative to each other and, preferably, around the common axis (CO).
6. Single-use flow cell (1) according to anyone of clauses 1 to 5,
   **characterized in that**
   the flow cell body (2) comprises a first flow cell body part (9) and a second flow cell body part (9') and in that, preferably, the flow path (3) is formed between the first flow cell body part (9) and the second flow cell body part (9') and/or the first flow cell body part (9) and the second flow cell body part (9') are connected, in particular bonded, to each other.
7. Single-use flow cell (1) according to anyone of clauses 1 to 6,
   **characterized in that**
   the flow cell body (2), in particular the first flow cell body part (9) and/or the second flow cell body part (9'), is at least in sections designed to not allow for the detection of scattered radiation of a multiangle light scattering measurement through the flow cell body (2), in particular through the respective flow cell body part (9, 9').
8. Single-use flow cell (1) according to anyone of clauses 1 to 7,
   **characterized in that**
   the flow cell body (2), in particular the first flow cell body part (9) and/or the second flow cell body part (9'), is at least in sections at least eighth-cylindrical-shaped, preferably quarter-cylindrical-shaped, further preferably at least semi-cylindrical-shaped, in particular cylindrical-shaped, and, preferably comprises at least on cylinder axis (CY), and/or in that the flow cell body (2), in particular the first flow cell body part (9) and/or the second flow cell body part (9'), is at least in sections, preferably completely, polyhedral-shaped.
9. Single-use flow cell (1) according to anyone of clauses 1 to 8,
   **characterized in that**
   the flow cell body (2) comprises a third flow cell body part (9") and in that, preferably, the flow path (3) is formed at least in sections inside the third flow cell body part (9") and/or the third flow cell body (9") is arranged, in particular bonded, at least in sections inside the flow cell body (2), preferably between the first flow cell body part (9) and the second flow cell body (9').
10. Single-use flow cell (1) according to anyone of clauses 1 to 9,
   **characterized in that**
   an adhesive used to bond the first flow cell body part (9) and the second flow cell body part (9') to each other and/or an adhesive used to bond the third flow cell body (9") part at least in sections inside the flow cell body (2), preferably between the first flow cell body part (9) and the second flow cell body part (9'), is configured as an index-matching material with regard to the flow cell body (2), in particular the first flow cell body part (9), the second flow cell body part (9') and/or the third flow cell body part (9").
11. Single-use flow cell (1) according to anyone of clauses 1 to 10,
   **characterized in that**
   the flow path (3) has a fluid inlet (4) and a fluid outlet (5) in fluid communication with each other, in that the flow path (3) is at least in sections designed as a channel, in that the flow path (3) is at least in sections bent, in particular at least in sections extends in a U-shape, and/or in that at least in sections, preferably continuously, the cross-section shape of the flow path (3) is rectangular and/or round, in particular circular or U-shaped.
12. Single-use flow cell (1) according to anyone of clauses 1 to 11,
   **characterized in that**
   the flow path (3) is formed at least in sections by a first flow path element (10) of the flow cell body (2), wherein preferably the first flow path element (10) is a groove or a flat surface section, and at least in sections by a second flow path (10') element of the flow cell body (2), wherein preferably the second flow path element (10') is a groove or a flat surface section, and in that, preferably, the first flow path element (10) and the second flow path element (10') adjoin each other and/or are arranged opposite to each other.
13. Single-use flow cell (1) according to anyone of clauses 1 to 12,
   **characterized in that**
   the flow cell body (2), in particular the outer surface of the flow cell body (2), comprises an excitation radiation entry section (6) for the entry of excitation radiation used for a multiangle light scattering measurement and/or an excitation radiation exit section (7) for the exit of excitation radiation used for a multiangle light scattering measurement and in that, preferably, an excitation radiation direction (E) is defined between the excitation radiation entry section (6) and the excitation radiation exit section (7).
14. Single-use flow cell (1) according to anyone of clauses 1 to 13,
   **characterized in that**
   the flow path (3) and the excitation radiation direction (E), the common axis (CO) and/or the cylinder axis (CY) at least in sections, in particular when adjoining and/or intersecting each other, run oblique and/or substantially parallel to each other.
15. Single-use flow cell (1) according to anyone of clauses 1 to 14,
   **characterized in that**
   the flow cell body (2), in particular the outer surface of the flow cell body (2), comprises at least one detector coupling section (11) for coupling, preferably via at least one optical fiber (12), at least one detector (13) for the detection of scattered radiation of a multiangle light scattering measurement to the single-use flow cell (1) and/or in that the flow cell body (2), in particular the outer surface of the flow cell body (2), comprises at least one radiation element coupling section (14) for coupling, preferably via at least one optical fiber (12), at least one radiation element (18, 18'), in particular at least one radiation source, for providing excitation radiation for a multiangle light scattering measurement to the single-use flow cell (1).
16. Single-use flow cell (1) according to anyone of clauses 1 to 15,
   **characterized in that**
   the flow cell body (2), in particular the outer surface of the flow cell body (2), is at least in sections polished and in that, preferably, the excitation radiation entry section (6), the excitation radiation exit section (7), the detector coupling section (11), the radiation element coupling section (14) and/or at least one scattered radiation exit section (16) for the exit of scattered radiation of a multiangle light scattering measurement is at least in sections polished.
17. Single-use flow cell (1) according to anyone of clauses 1 to 16,
   **characterized in that**
   the single-use flow cell (1) comprises an adjustment element for adjusting the position and/or orientation of the single-use flow cell (1).
18. Detection device (17) for the detection of scattered radiation of a multiangle light scattering measurement, comprising:
   - a detection unit for the detection of scattered radiation of a multiangle light scattering measurement, preferably comprising at least one detector (13) for the detection of scattered radiation of a multiangle light scattering measurement, and
   - a flow cell section (27) for the interaction, in particular reception, of at least one flow cell (1),
   **characterized in that**
   the detection device (17) comprises a power interface (20), in particular a power connection element, for the connection to an external power supply unit (21).
19. Detection device (17) according to clause 18,
   **characterized in that**
   the detection device (17) comprises at least one radiation element (18) for providing excitation radiation for a multiangle light scattering measurement and, preferably, the radiation element (18) comprises at least one radiation source, in particular at least one laser, and/or at least one optical fiber (12) and/or that the detection device (17) comprises a radiation interface, in particular a radiation connection element, for the connection to an external radiation source, in particular external laser.
20. Detection device (17) according to clause 18 or clause 19,
   **characterized in that**
   the detection device (17) comprises a control interface (20'), in particular a control connection element, for the connection to an external control unit (22), in particular for controlling the radiation element (18) and/or the detector (13).
21. Detection device (17) according to anyone of clauses 18 to 20,
   **characterized in that**
   the flow cell section (27) comprises at least one flow cell holder for the, preferably detachable, connection of a flow cell (1) and/or in that the detection device (17) comprises a flow cell (1) and the flow cell (1) is, preferably inseparably, connected to the detection device (17), in particular in the flow cell section (27).
22. Detection device (17) according to anyone of clauses 18 to 21,
   **characterized in that**
   the detection device (17), preferably the detection unit, comprises a plurality of detectors (13) and in that the plurality of detectors (13) are arranged at least quadrant-shaped, preferably at least semicircular-shaped, in particular circular-shaped, around the flow cell section (27) and/or the flow cell (1).
23. Detection device (17) according to anyone of clauses 18 to 22,
   **characterized in that**
   the detection device (17) comprises an adjustment element for adjusting the position and/or orientation of a flow cell (1), in particular a flow cell (1) received in the detection device (17).
24. Electronics device (19) for the use in a multiangle light scattering measurement comprising:
   - a power supply unit (21) for supplying power to at least one detection device (17) for the use in a multiangle light scattering measurement,
   - a control unit (22) for controlling at least one detection device (17) for the use in a multiangle light scattering measurement, preferably for controlling at least one radiation element (18) and/or at least one detector (13) for the use in a multiangle light scattering measurement, and
   - at least one transfer interface (25), preferably at least one transfer connection element, for transferring power and/or at least one control signal to at least one detection device (17) for the use in a multiangle light scattering measurement.
25. Electronics device (19) according to clause 24,
   **characterized in that**
   the electronics device (19) comprises at least one radiation element (18'), preferably comprising at least one radiation source, for providing excitation radiation for a multiangle light scattering measurement and, preferably, the transfer interface (25), preferably the transfer connection element, is designed for transferring excitation radiation of the radiation element (18'), preferably of the radiation source, to at least one detection device (17) for the use in a multiangle light scattering measurement.
26. Electronics device (19) according to clause 24 or clause 25,
   **characterized in that**
   the electronics device (19) comprises a graphical user interface unit (23) for displaying and/or receiving information, in particular information regarding the power supply unit (21), the control unit (22), the transfer interface (25), the radiation element, in particular radiation source, and/or the
   communication interface unit and/or in that the electronics device (19) comprises a communication interface unit for receiving and/or transmitting information.
27. Electronics device (19) according to anyone of clauses 24 to 26,
   **characterized in that**
   the electronics device (19) comprises a data handling unit (24) and/or in that the electronics device comprises a signal handling unit (24) for handling, in particular receiving and/or processing, the signals of a detection device (17) for the use in a multiangle light scattering measurement, in particular of at least one detector (13) for the detection of scattered radiation of a multiangle light scattering measurement.
28. System (15) for the use in, in particular for performing, a multiangle light scattering measurement, comprising:
   at least one flow cell (1) for the use in a multiangle light scattering measurement, in particular at least one single-use flow cell (1) according to anyone of clauses 1 to 17, at least one detection device (17) for the detection of scattered radiation of a multiangle light scattering measurement, in particular at least one detection device (17) according to anyone of clauses 18 to 23,
   and/or at least one electronics device (19) for the use in a multiangle light scattering measurement, in particular at least one electronics device (19) according to anyone of clauses 24 to 27.
29. System (15) according to clause 28,
   **characterized in that**
   the system (15) comprises a frame (28), preferably having a grid structure comprising several grid sections (29), and in that the flow cell (1), the detection device (17) and/or the electronics device (19) is connectable to the frame (28), in particular receivable by at least one grid section (29) of the grid structure.
30. System (15) according to clause 28 or clause 29,
   **characterized in that**
   the flow cell (1), the detection device (17) and/or the electronics device (19) are, preferably in a detachable manner, connectable with each other and/or in that the system (15) comprises at least one transfer element, in particular transfer cable (26), for transferring power, excitation radiation, at least one signal and/or data between the electronics device (19), the detection device (17), the flow cell (1) and/or the frame (28), in particular the grid structure.
31. System (15) according to anyone of clauses 28 to 30,
   **characterized in that**
   the flow cell (1) can be coupled, preferably via at least one optical fiber (12), to at least one detector (13) for the detection of scattered radiation of a multiangle light scattering measurement of the detection device (17) for transmitting scattered radiation of a multiangle light scattering measurement and/or in that the flow cell (1) can be coupled, preferably via at least one optical fiber (12), to at least one radiation element (18, 18'), in particular at least one radiation source, for providing excitation radiation for a multiangle light scattering measurement of the detection device (17) and/or the electronics device (19) for transmitting excitation radiation used for a multiangle light scattering measurement.
32. System (15) according to anyone of clauses 28 to 31,
   **characterized in that**
   the detector (13) for the detection of scattered radiation of a multiangle light scattering measurement of the detection device (17) is aligned with the direction of the surface normal of a side wall (8) of the flow cell (1), preferably arranged opposite of the detector (13), and/or in that the plurality of detectors (13) for the detection of scattered radiation of a multiangle light scattering measurement of the at least on detection device (17) are arranged at least quadrant-shaped, preferably at least semicircular-shaped, in particular circular-shaped, relative to, in particular around, the flow cell (1).
33. System (15) according to anyone of clauses 28 to 32,
   **characterized in that**
   the radiation element (18, 18'), preferably the radiation source, in particular the laser, of the detection device (17) and/or electronics device (19) defines a radiation direction, wherein along the radiation direction excitation radiation for a multiangle light scattering measurement is emitted and in that the radiation direction and the flow path (3) at least in sections, in particular when adjoining and/or intersecting each other, run oblique and/or substantially parallel to each other.
34. System (15) according to anyone of clauses 28 to 33,
   **characterized in that**
   the flow path (3) of the flow cell (1) is provided as a bypass line for a main line transporting a sample.

Further features and advantages of the single-use flow cell, the detection device, the electronics device and the system for the use in a multiangle light scattering measurement emerge from the following description of exemplary embodiments where reference is made to the attached drawing.

In the drawing
- Fig. 1a to 1b: show exemplary embodiments of a single-use flow cell with a cylindrical flow cell body in a perspective view,
- Fig. 2a to 2e: show exemplary embodiments of a single-use flow cell with different side wall configurations in a side view,
- Fig. 3a to 3b: show exemplary embodiments of a single-use flow cell with obliquely running side walls in a side view,
- Fig. 4a to 4b: show exemplary embodiments of a single-use flow cell comprising multiple flow cell body parts in a perspective view,
- Fig. 5a to 5d: show exemplary embodiments of a single-use flow cell comprising multiple flow cell body parts and the flow path formed by flow path elements in a perspective view,
- Fig. 6a to 6d: show exemplary embodiments of a single-use flow cell comprising a U-shaped flow path respectively in a front view and a sectional side view,
- Fig. 7a to 7f: show exemplary embodiments of a single-use flow cell having a partially cylindrical shape in a side view,
- Fig. 8a to 8d: show exemplary embodiments of a single-use flow cell having a polyhedral-shape in a side view,
- Fig. 9: shows an exemplary embodiment of a single-use flow cell with a detector coupling section in a side view,
- Fig. 10: shows an exemplary embodiment of a system for the use in a multiangle light scattering measurement, wherein a plurality of detectors for the detection of scattered radiation of a multiangle light scattering measurement are arranged around a flow cell, and
- Fig. 11a to 11f: show different exemplary embodiments of a system for the use in a multiangle light scattering measurement.

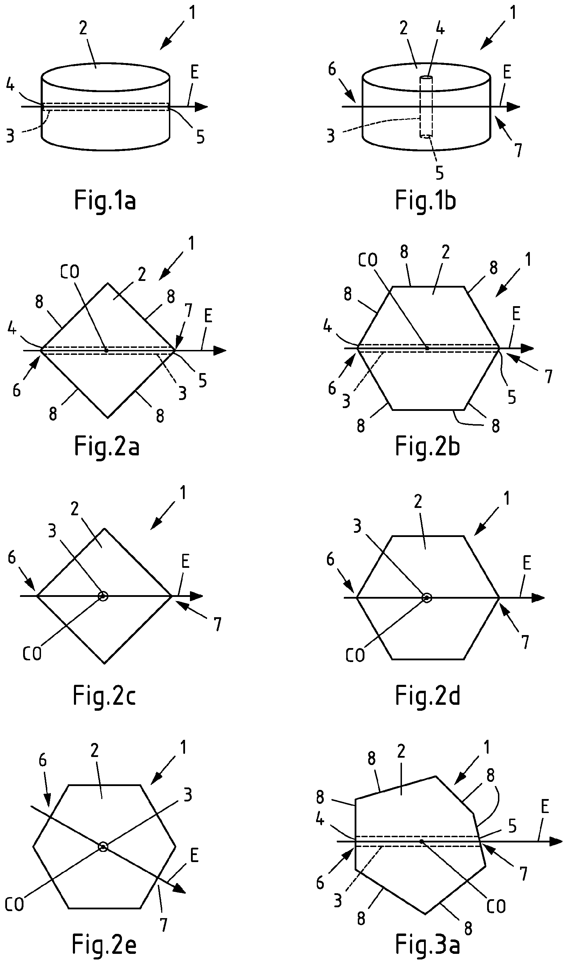

Fig. 1a to 1b show exemplary embodiments of a single-use flow cell 1 with a cylindrical flow cell body 2 in a perspective view. The single-use flow cell 1 comprises a flow path 3 which is provided in the flow cell body 2.

The flow cell body 2 of the embodiments shown in Fig. 1a and 1b is in each case manufactured by cold casting quartz glass, however other materials and/or manufacturing techniques can also be used to produce the flow cell body 2. The used quartz glass is an optical transparent material, wherein it is preferably optical transparent for electromagnetic radiation of the VIS, UV and/or NIR radiation range.

The flow path 3 of the single-use flow cell 1 is designed for guiding and passing a sample through the single-use flow cell 1. For this the flow path 3 comprises a fluid inlet 4 and a fluid outlet 5 which are in fluid communication with each other. In the shown exemplary embodiments the flow path 3 is designed as a channel and with a round cross section. However, other designs are possible.

The single-use flow cell 1 shown in Fig. 1a or Fig. 1b is used for multiangle light scattering measurements. For such a measurement a sample is passed through the single-use flow cell 1 in the flow path 3. At the same time excitation radiation provided by a radiation source, for example a laser source, interacts with the sample and as a result the radiation is scattered. The scattered radiation is then detected by a detector and based on the information gathered by the detector the absolute molar mass and/or the average size of molecules in the sample can for example be determined.

In the exemplary embodiments of Fig. 1a and 1b the excitation radiation direction E is shown. The excitation radiation direction E is defined between an excitation radiation entry section 6 for the entry of excitation radiation into the single-use flow cell 1 and an excitation radiation exit 7 section for the exit of excitation radiation out of the single use-flow cell 1. The excitation radiation direction E describes the path of the excitation radiation if it would not be scattered upon collision with the sample in the single-use flow cell 1.

In order to minimize the influence on the excitation radiation as well as the scattered radiation the single-use flow cell 1, preferably the outer surface of the flow cell body 2, are polished.

In the embodiment shown in Fig. 1a the excitation radiation direction E runs parallel with the flow path 3. In this way the excitation radiation can follow the flow path 3 and interact along the flow path 3 with the sample and exit the single-use flow cell 1 preferably via the cylindrical side wall.

In the embodiment shown in Fig. 1a the excitation radiation direction E runs obliquely, in particular perpendicularly, to the flow path 3. In this way the excitation radiation can interact with the sample at an oblique, in particular perpendicular, angle and exit the single-use flow cell 1 preferably via the cylindrical outer surface.

Fig. 2a to 2e show exemplary embodiments of a single-use flow cell 1 with different side wall 8 configurations in a side view. Elements that correspond to elements already described in the previous embodiments are identified by the same reference signs.

In the embodiments shown in Fig. 2a to 2e, the flow cell body 2, in particular the outer surface of the flow cell body 2, comprises a plurality of side walls 8. In case of the embodiments of Fig. 2a and 2c at least four side walls 8 are provided and in case of the embodiments of Fig. 2b, 2d and 2e at least eight side walls 8 are provided. The adjoining side walls 8 are arranged obliquely with respect to each other and the side walls 8 are arranged around a common axis CO. In the embodiments shown in each case two of the side walls 8 arranged opposite to each other and also run parallel to each other. The side walls 8 also have a flat surface. This simplifies machining, for example polishing, the respective side walls 8. In particular the opposite arranged side walls 8 can easily be machined at the same time.

By increasing the number of side walls 8 the probability rises that excitation radiation scattered by the sample, i.e. scattered radiation, impinges the side walls 8 at a right angle thus improving the measurement results. In order to obtain a right-angle impact of the scattered radiation with the outer surface of the flow cell body 2 an arc-shape, in particular circular shape and/or cylindrical shape, would be the most suitable geometries for the outer surface of the flow cell body 2. However, such arc-shaped geometries are more difficult to produce, thus the provision of a plurality of side walls 8 represents a good compromise between manufacturing complexity and influence on the measurement results.

As it was the case with the embodiments of Fig. 1a and 1b the, excitation radiation direction E can run parallel or oblique to the flow path 3. In the case of the embodiments 2a to 2d the excitation radiation entry section 6 and the excitation radiation exit 7 section are arranged at the corners of the side walls 8, however, as shown in Fig. 2e, the radiation entry section 6 and/or the excitation radiation exit 7 section can be arranged in the central surfaces of the side walls 8. This in particular facilitates a perpendicular impact of the excitation radiation upon entry in the flow cell body 2, thus reducing the influence on the excitation radiation.

Fig. 3a to 3b show exemplary embodiments of a single-use flow cell 1 with obliquely running side walls 8 in a side view. Elements that correspond to elements already described in the previous embodiments are identified by the same reference signs.

In the embodiments shown the flow cell body 2 comprises a plurality of side walls 8. In contrast to the embodiments shown in Fig. 2a to 2e not only adjoining side walls 8 run obliquely with respect to each other but also, preferably with respect to the common axis CO, oppositely arranged side walls 8 run obliquely with respect to each other. This helps increasing the probability that the scattered radiation impacts the outer surface of the flow cell body 2 at a right-angle, i.e. increases the number of different optimal detection angles.

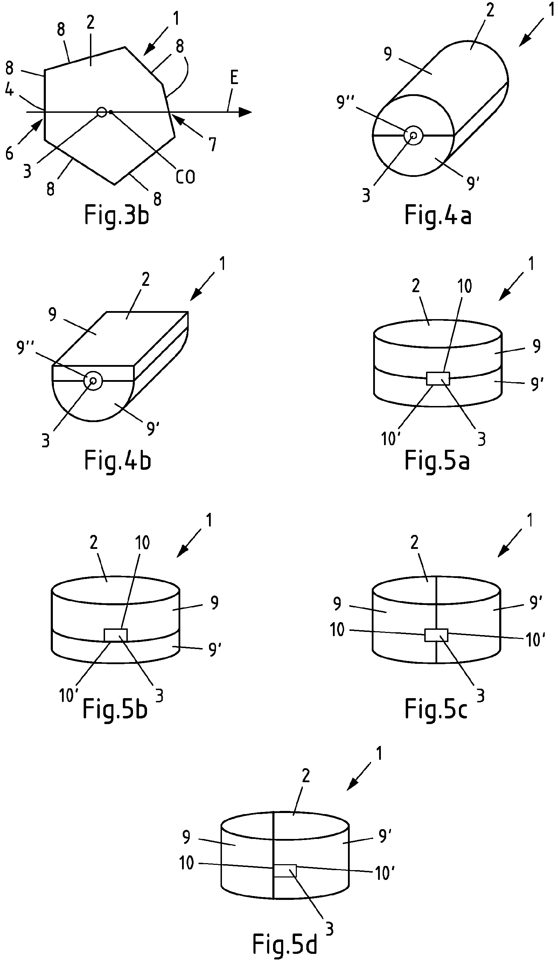

In these embodiments and/or the other embodiments it can be provided that the normal vector of respectively at least some of the side walls 8, preferably of the predominant share of the side walls 8, in particular of all of the side walls 8, intersect in the flow path 3, preferably in the same point of intersection. This is the case for the embodiments shown in Fig. 3a and 3b.

Fig. 4a to 4b show exemplary embodiments of a single-use flow cell 1 comprising multiple flow cell body parts 9, 9', 9" in a perspective view. Elements that correspond to elements already described in the previous embodiments are identified by the same reference signs.

The flow cell bodies 1 shown in Fig. 4a to 4b comprise a first flow cell body part 9, a second flow cell body part 9' and a third flow cell body part 9". The different flow cell body parts 9, 9' 9" are connected, preferably bonded, together, for example by and adhesive. The adhesive used can be configured as an index-matching material with regard to the flow cell body 2. In this way the influence of the adhesive used for bonding the different flow cell body parts 9, 9' 9" on the radiation used for a multiangle light scattering measurement is reduced.

In the embodiments shown the flow path 3 is provided in the third flow cell body part 9" and arranged between the first flow cell body part 9 and the second flow cell body part 9'. This simplifies it to provide a complex flow path 3 geometry and to produce the different flow cell body parts 9, 9' 9" from different materials.

In the embodiment shown in Fig. 4a the first flow cell body part 9 and the second flow cell body part 9' are designed substantially identical, thus reducing the number of different parts and simplifying manufacturing of the single-use flow cell 1.

In contrast, in the embodiment shown in Fig. 4b the first flow cell body part 9 and the second flow cell body part 9' are designed substantially different to each other. The flow cell body 2 only comprises one partially cylindrical part, which is the second flow cell body part 9', while the first flow cell body part 9 is formed substantially polyhedral-shaped. In this way only one cylindrical shape, which is the more complex shape in terms of production, has to be produced. The partially cylindrical second flow cell body part 9' thus in particular lends itself to be used as the area where the scattered radiation is intended to exit the flow cell body 2.

In addition, the first flow cell body part 9 also lends itself to be designed to not allow for the detection of scattered radiation of a multiangle light scattering measurement. The first flow cell body part 9 then functions as a sort of a lid.

Fig. 5a to 5d show exemplary embodiments of a single-use flow cell 1 comprising multiple flow cell body parts 9, 9' and the flow path 3 formed by flow path elements 10, 10' in a perspective view. Elements that correspond to elements already described in the previous embodiments are identified by the same reference signs.

The embodiments shown in Fig. 5a to 5d comprise a first flow cell body part 9 and a second flow cell body part 9' connected, preferably bonded, together. In contrast to the single-use flow cells 1 shown in Fig. 4a to 4b, the flow path is not formed in a separate third flow cell body part but is provided by a first flow path element 10 and a second flow path element 10' which are arranged opposite to each other and adjoin each other. The flow path elements 10, 10' are parts of the first flow cell body part 9 and a second flow cell body part 9'. In this way the flow path 3 can be directly provided when molding the flow cell body parts 9, 9' or by machining the flow path 3 in the flow cell body parts 9, 9', for example by milling.

In the case of the embodiments 5a and 5c the first flow path element 10 and the second flow path element 10' are designed as grooves in the respective flow cell body parts 9, 9'. This in particular lends itself when the two flow cell body parts 9, 9' are designed substantially identical, thus further simplifying the production of the single-use flow cells 1.

In the case of the embodiments 5b and 5d either the first flow path element 10 or the second flow path element 10' are designed as grooves. The other flow path element 10, 10' is in contrast designed as a flat surface. In this way the wall of the flow cell body part 9, 9' comprising the flow path element 10, 10' designed as a flat surface can thus also be designed entirely flat. In this way only one groove needs to be provided and the flow cell body part 9, 9' having the entirely flat surface can be manufactured more easily.

Independent of the embodiments of Fig. 5a to 5d, the surfaces of the first flow cell body part 9 and the second flow cell body part 9' connected, preferably bonded, toe each other can extend at least in sections, preferably entirely, parallel to the common axis and/or the cylinder axis and/or least in sections, preferably entirely, obliquely, preferably perpendicularly, to the common axis and/or the cylinder axis.

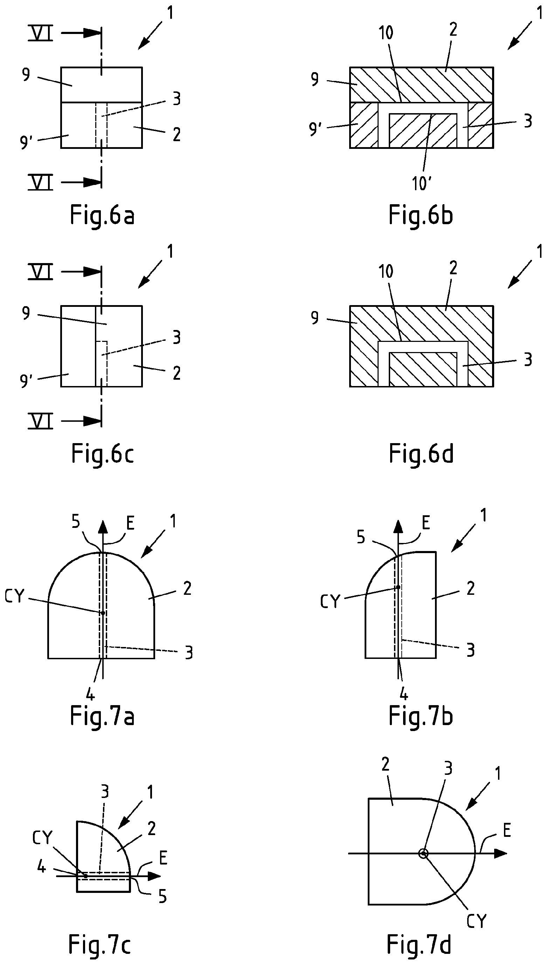

Fig. 6a to 6d show exemplary embodiments of a single-use flow cell 1 comprising a U-shaped flow path 3 respectively in a front view and a sectional side view. Elements that correspond to elements already described in the previous embodiments are identified by the same reference signs.

The single-use flow cell 1 shown in Fig. 6a to 6d in each case comprises a first flow cell body part 9 and a second flow cell body part 9'. Fig. 6a and 6b show a first embodiment of a single-use flow cell 1 comprising a U-shaped flow path 3 and Fig. 6c and 6d show a second embodiment of a single-use flow cell 1 comprising a U-shaped flow path 3.

As can be seen in the sectional view of Fig. 6b, in the first embodiment the flow path 3 is formed by a first flow path element 10 in the form of a flat surface and a second flow path element 10' in the form of a U-shaped groove. This design in particular lends itself when the single-use flow cell 1 is used in a bypass. In this first embodiment the first flow path element 10 preferably only extends along a section of the flow path 3.

In the second embodiment shown in Fig. 6c and 6d the flow path 3 is formed by a first flow path element 10 in the form of a U-shaped groove in the first flow cell body part 9 and by the second flow path element 10' (not highlighted in Fig. 6c and 6d) in the form of a flat surface of the second flow cell body part 9'. In this embodiment the first flow path element 10 and the second flow path element 10' preferably extend along the entire flow path 3.

Fig. 7a to 7f show exemplary embodiments of a single-use flow cell 1 having a partially cylindrical shape in a side view. Elements that correspond to elements already described in the previous embodiments are identified by the same reference signs.

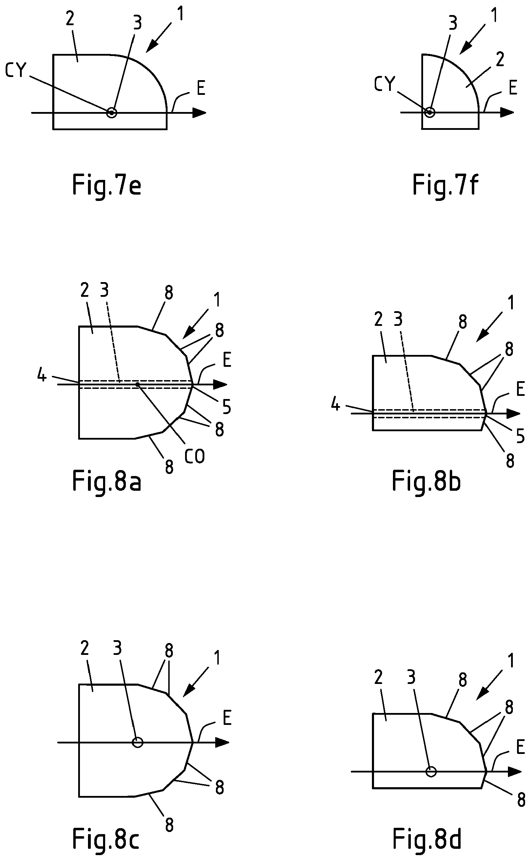

The flow cell body 2 of the different embodiments shown in Fig. 7a to 7f is at least in sections formed cylindrical shaped. For example, the flow cell bodies 2 of the embodiments of Fig. 7b, 7c, 7e and 7f are in sections quarter-cylindrical-shaped. In this way a sufficiently large area is provided with an arc-shape, which allows for the scattered radiation to exit the flow cell body 2 in this area at a right angle, thus providing good measurement results in this area. The remaining part of the flow cell body 2 can have for example flat surfaces, which make it easier to produce the single-use flow cell 1. The cylindrical shaped section of the respective flow cell bodies 2 are in each case arranged around a cylinder axis CY.

In case of the embodiments of Fig. 7a and 7d the flow cell bodies 2 are in sections semi-cylindrical-shaped. In this way the area with an arc-shape is enlarged, which simplifies it for the scattered radiation to exit the flow cell body 2 at a right angle, thus simplifying it to achieve good measurement results.

In the embodiments shown the flow cell body 2 also comprises a section that is polyhedral-shape.

As already described with respect to previous embodiments the excitation radiation direction E can also run parallel or oblique to the flow path 3 in the embodiments shown.

In order to improve the measurement results it is provided that the cylinder axis CY intersects with the flow path 3 and/or the excitation radiation direction E and/or that the cylinder axis CY is arranged inside the flow path 3. Thereby it is simplified that scattered radiation impinges a sidewall at a right angle, in particular in the sections that are formed cylindrical shaped.

Fig. 8a to 8d show exemplary embodiments of a single-use flow cell 1 having a polyhedral-shape in a side view. Elements that correspond to elements already described in the previous embodiments are identified by the same reference signs.

The side walls 8 of the respective flow cell bodies 2 of the different embodiments shown in Fig. 8a to 8d are arranged at least quadrant-shaped, wherein in Fig. 8a and 8c the side walls 8 are even arranged semicircular-shaped. The side walls 8 are in the shown embodiments arranged around a common axis CO (For the sake of clarity, only in Fig. 8a the common axis CO is shown). The provision of a plurality of side walls 8 arranged in the shown manner represents a good compromise between manufacturing complexity and influence on the radiation and thus on the measurement results.

As already described with respect to previous embodiments the excitation radiation direction E can also run parallel or oblique to the flow path 3 in the embodiments shown.

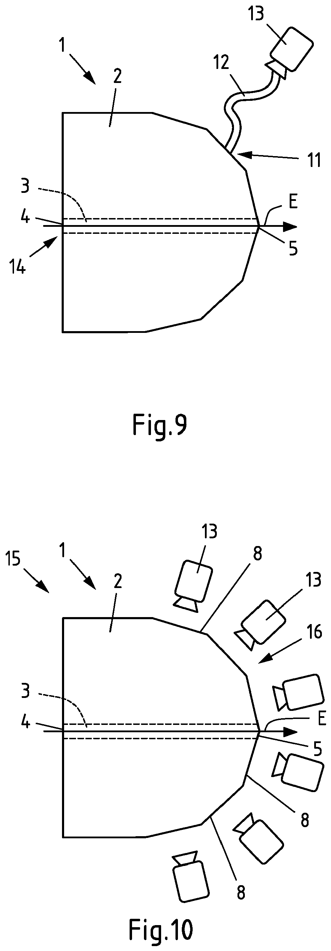

Fig. 9 shows an exemplary embodiment of a single-use flow cell 1 with a detector coupling section 11 in a side view. Elements that correspond to elements already described in the previous embodiments are identified by the same reference signs.

The detector coupling section 11 is provided on an outer surface of the flow cell body 2 and is preferably at least in sections polished. Arranged at and preferably in contact with the detector coupling section 11 is an optical fiber 12 which is coupled to a detector 13 for the detection of scattered radiation of a multiangle light scattering measurement. Scattered radiation can thus be directly detected upon exiting the single-use flow cell 1 and negative influence due to particulates or other external influences on the detection of the scattered radiation can thus be minimized.

Moreover, the single-use flow cell 1, in particular the flow cell body 2, can also comprise a radiation element coupling section 14 for coupling a radiation element. A radiation source can be coupled to the single-use flow cell 1 by an optical fiber, which is arranged at and preferably in contact with the radiation element coupling section 14. The radiation element section 14 is preferably at least in sections polished.

Fig. 10 shows an exemplary embodiment of a system 15 for the use in a multiangle light scattering measurement, wherein a plurality of detectors 13 for the detection of scattered radiation of a multiangle light scattering measurement are arranged around a flow cell 1. Elements that correspond to elements already described in the previous embodiments are identified by the same reference signs.

In the system 15 shown the flow cell 1 is a single-use flow cell 1, however, the flow cell 1 does not necessarily have to be a single-use flow cell 1.

In the system 15 a plurality of detectors 13 are arranged around the outer surface of the single-use flow cell 1 where the scattered radiation is expected to exit the single-use flow cell 1, i.e. the detectors are arranged around a scattered radiation exit section 16.

In order to achieve good measurement results, the detectors 13 are aligned with the direction of the surface normal of the respective side wall 8 of the single-use flow cell 1 and the detectors 13 are arranged opposite of the respective side wall 8. In order to simplify measuring the scattered radiation even at low angles, the detectors 13 are arranged semicircular-shaped around the single-use flow cell 1.

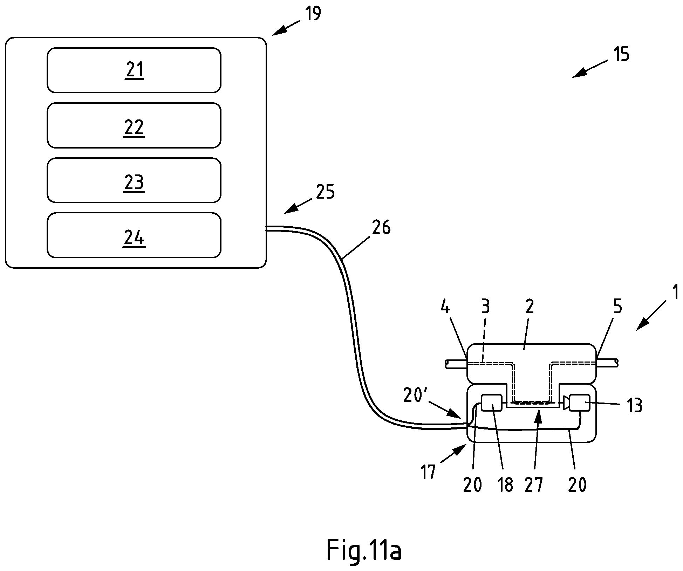

Fig. 11a to 11f show different exemplary embodiments of a system 15 for the use in a multiangle light scattering measurement. Elements that correspond to elements already described in the previous embodiments are identified by the same reference signs.

The systems 15 shown in Fig. 11a to 11f in general comprise a flow cell 1, a detection device 17 and an electronics device 19. However, the systems 15 shown in Fig. 11a to 11f mainly differ in the way the detection device 17 and an electronics device 19 are designed.

In the systems 15 shown in Fig. 11a to 11f the flow cell 1 is a single-use flow cell 1, however, the flow cell 1 does not necessarily have to be a single-use flow cell 1. Moreover, the flow cell 1 can be part of another component.

Fig. 11a shows a first embodiment of the system 15. In this embodiment the detection device 17 comprises a radiation element 18 in the form of a radiation source and a detector 13 arranged opposite of the radiation element 18.

In order to supply the radiation element 18 and the detector 13 with power the detection device 17 comprises a power interface 20. In the embodiment shown the power interface 20 comprises power connection elements in the form of cables, to connect the parts of the detection device 17 and thus the detection device 17 itself to an external power source, for example a power supply unit 21 of the electronics device 19. Moreover, the detection device 17 also comprises a control interface 20' for the connection to an external control unit 22 for controlling the radiation element 18 and the detector 13. In the embodiment shown the cables of the power interface 20 are also part of the control interface 20' and vice versa, i.e. the cables are used for transmitting power and data and/or signals at the same time.

The electronics device 19 shown in Fig. 11a is a separate device from the flow cell 1 and the detection device 17 and comprises in addition to the power supply unit 21 and the control unit 22 also a graphical user interface unit 23 and a combined data handling and signal handling unit 24. The control unit 22 could also be combined with the data handling and signal handling unit 24.

In order to transmit power from the power supply unit 21 and at least one control signal and/or data from the control unit 22 from the electronics device 19 to the detection device 17 a transfer interface 25 is provided. Other things, like excitation radiation, could also be transmitted via the transfer interface 25. The transfer interface 25 is coupled to a cable 26 which transmits the power and the at least one signal to the detection device 17. The cable 26 is preferably a transfer cable.

The single-use flow cell 1 is arranged in sections between the radiation element 18 and the detector 13 in a flow cell section 27 of the detection device 17. The radiation element 18 emits radiation which is scattered by the sample in the flow path 3 and the scattered radiation is then detected by the detector 13. In the shown embodiment the flow cell section 27 is designed as flow cell holder, such that the single-use flow cell 1 is detachably connected to the detection device 17. The radiation is shown in a simplified manner as dotted line.

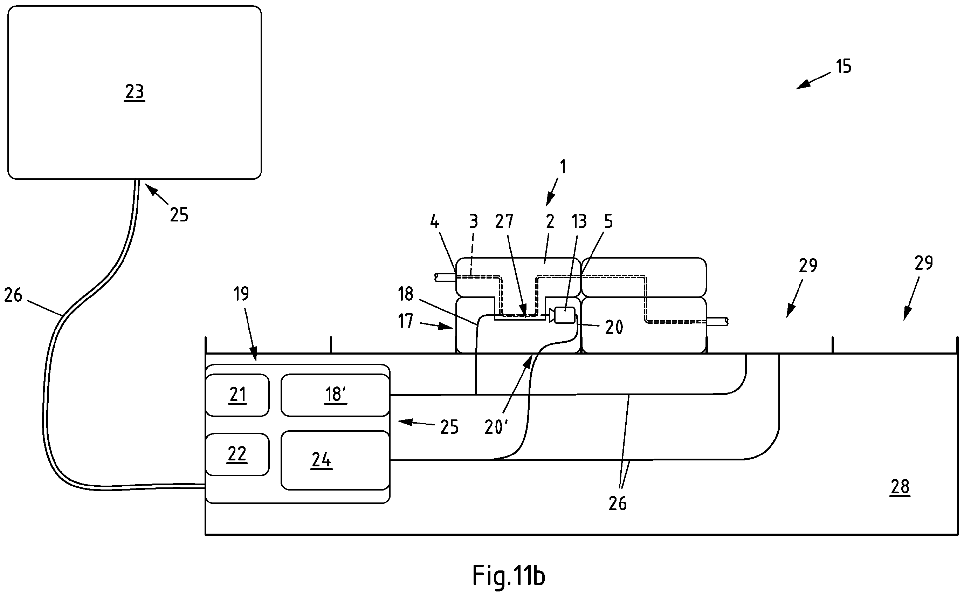

Fig. 11b shows a second embodiment of the system 15. For the sake of clarity in particular the differences with regard to the previous embodiment of the system 15 are explained.

In the embodiment of Fig. 11b the detection device 17 also comprises a radiation element 18, however, the radiation element 18 is formed by an optical fiber and does not comprise a radiation source. The radiation source is instead provided in a radiation element 18' of the electronics device 19. Due to the omission of the radiation source in the detection device 17, the detection device 17 can be designed very compact.

In order to receive excitation radiation from the external radiation element 18' the detection device 17 comprises a radiation interface, in particular a radiation connection element. In the embodiment shown, the radiation interface is combined with the control interface 20'. Moreover, the transfer interface 25 is in this embodiment also designed for transferring excitation radiation of the radiation element 18' of the electronics device 19 to the radiation element 18 of the detection device, preferably via the radiation interface.

The system 15 comprises in the shown embodiment a frame 28 having a grid structure comprising several grid sections 29. As shown in Fig. 11b the detection device 17 is connected to the frame 28 and received by a grid section 29 of the grid structure. In this way a precise positioning of the detection device is achieved. The remaining grid sections 29 can also be provided with power, radiation, signals and/or data via the cables 26 to allow for the placement of additional devices such as additional detection devices 17 and/or to place the detection device 17 at a different position on the grid structure.

In addition, the graphical user interface unit 23 was moved further away from the power supply unit 21 and the combined data handling and signal handling unit 24 in the embodiment shown.

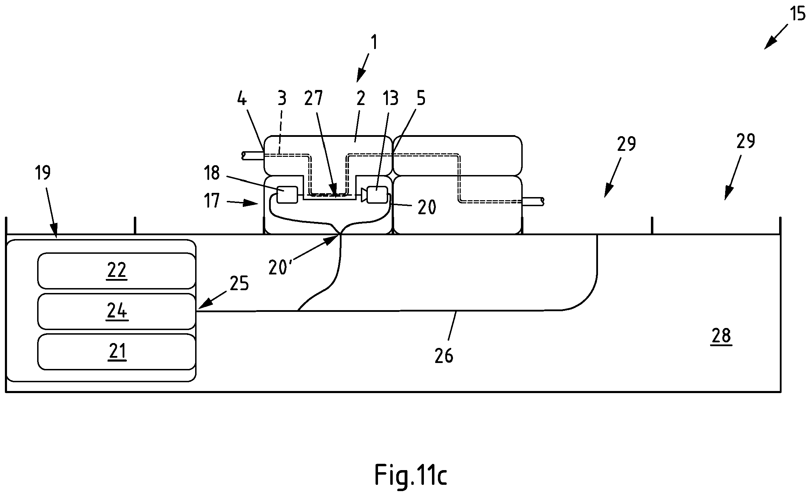

Fig. 11c shows a third embodiment of the system 15. For the sake of clarity in particular the differences with regard to the previous embodiments of the system 15 are explained.

The embodiment shown in Fig. 11c is similar to the embodiment of Fig. 11a, however, the system 15 comprises a frame 28 including a plurality of grid sections 29 and the electronics device 19 mainly, preferably only, comprises the power supply unit 21, the control unit 22 and the combined data handling and signal handling unit 24.

Moreover, the electronics device 19 is arranged connected to and preferably arranged in the frame 28.

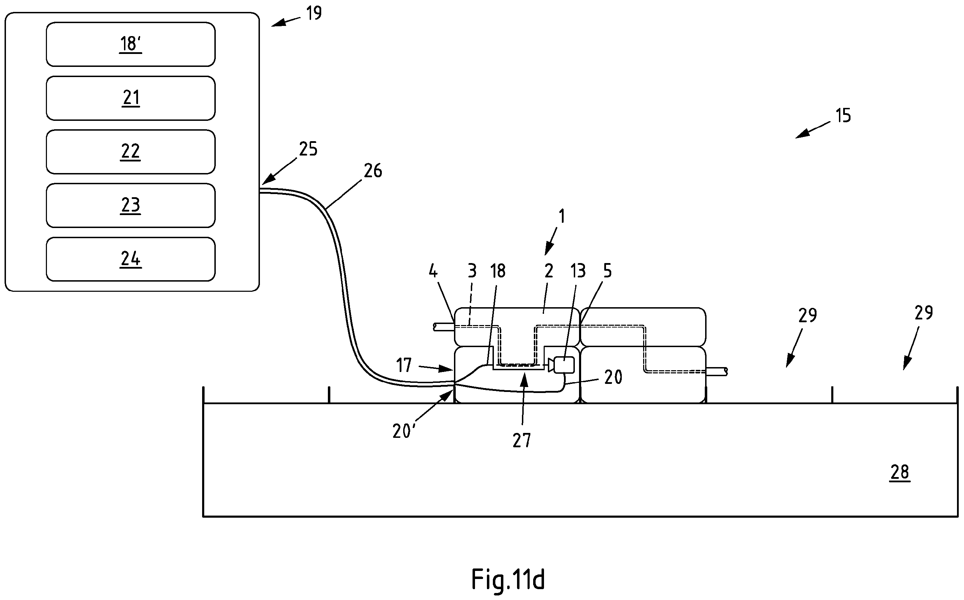

Fig. 11d shows a fourth embodiment of the system 15. For the sake of clarity in particular the differences with regard to the previous embodiments of the system 15 are explained.

The embodiment shown in Fig. 11d is similar to the embodiment of Fig. 11a, however, the electronics device 19 comprises a radiation element 18' with a radiation source. The detection device 17 on the other hand comprises a radiation element 18 in the form of an optical fiber and does not comprise a radiation source. The radiation is in this case transferred via the cable 26 from the electronics device 19 to the detection device 17.

Moreover, the system 15 comprises a frame 28 including a plurality of grid sections 29 and the detection device 17 is received in one of the gird sections 29. However, in comparison to the embodiment of Fig. 11c the electronics device 19 is not connected to the frame and/or received in a grid section 29.

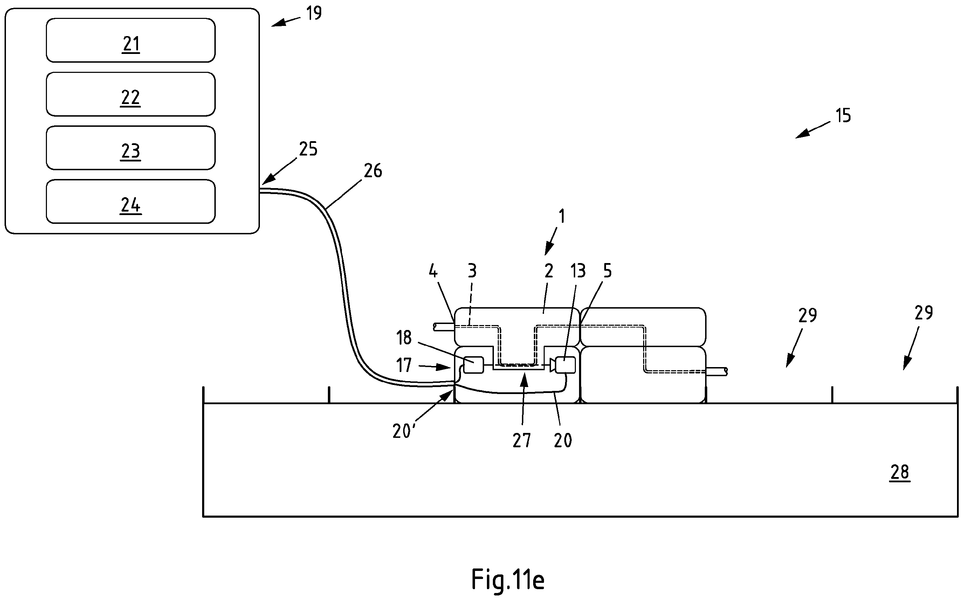

Fig. 11e shows a fifth embodiment of the system 15. For the sake of clarity in particular the differences with regard to the previous embodiments of the system 15 are explained.

The embodiment shown in Fig. 11e is similar to the embodiment of Fig. 11a, however, the system 15 comprises a frame 28 including a plurality of grid sections 29. However, in comparison to the embodiment of Fig. 11c the electronics device 19 is not connected to the frame and/or received in a grid section 29.

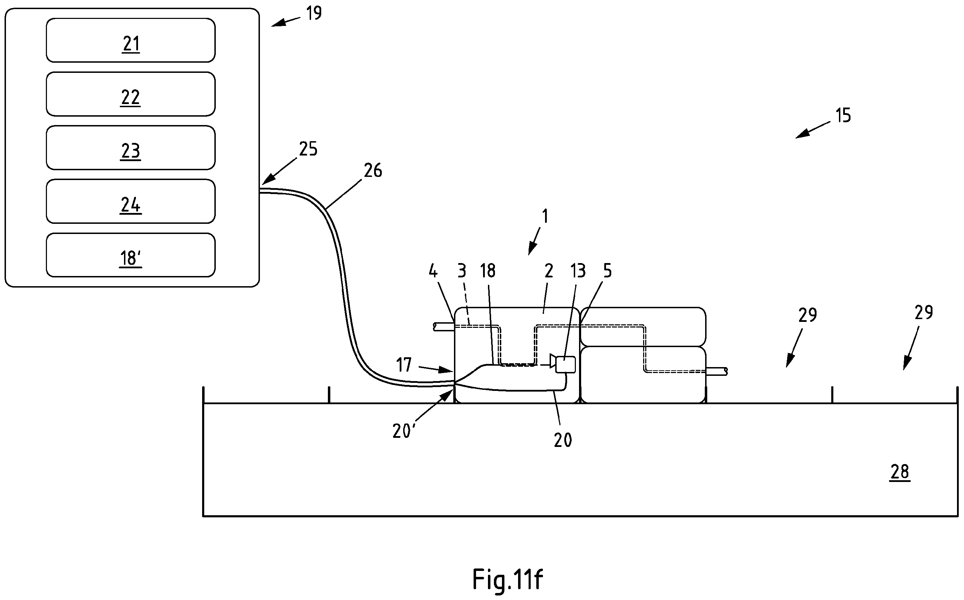

Fig. 11f shows a sixth embodiment of the system 15. For the sake of clarity in particular the differences with regard to the previous embodiments of the system 15 are explained.

The embodiment shown in Fig. 11e is similar to the embodiment of Fig. 1d, however, the single-use flow cell 1 and the detection device 17 form a single, preferably inseparable, unit.

### List of reference signs

- 1: single-use flow cell
- 2: flow cell body
- 3: flow path
- 4: fluid inlet
- 5: fluid outlet
- 6: excitation radiation entry section
- 7: excitation radiation exit section
- 8: side walls
- 9: first flow cell body part
- 9": second flow cell body part
- 9': third flow cell body part
- 10: first flow path element
- 10': second flow path element
- 11: detector coupling section
- 12: optical fiber
- 13: detector
- 14: radiation element coupling section
- 15: system
- 16: scattered radiation exit section
- 17: detection device
- 18: radiation element
- 18': radiation element
- 19: electronics device
- 20: power interface
- 20': control interface
- 21: power supply unit
- 22: control unit
- 23: graphical user interface unit
- 24: data handling unit and signal handling unit
- 25: transfer interface
- 26: cable
- 27: flow cell section
- 28: frame
- 29: grid section

- E: excitation radiation direction
- CO: common axis
- CY: cylinder axis

## Claims

1. Single-use flow cell (1) for the use in a multiangle light scattering measurement, comprising:
- a flow cell body (2), and
- a flow path (3) for passing a sample through the single-use flow cell (1),
- wherein the flow path (3) is provided at least in sections in the flow cell body (2),
**characterized in that**
the single-use flow cell (1) is manufactured at least in sections by cold casting, injection molding, machining and/or additive manufacturing of an optical transparent material.

2. Single-use flow cell (1) according to claim 1,
**characterized in that**
the optical transparent material comprises quartz glass, at least one polymer and/or plastic and/or **in that** the optical transparent material is optical transparent for electromagnetic radiation with a wavelength of at least 200 nm, preferably at least 400 nm, in particular at least 600 nm and/or at most 1100 nm, preferably at most 1000 nm, in particular at most 900 nm.

3. Single-use flow cell (1) according to claim 1 or claim 2,
**characterized in that**
the flow cell body (2), in particular the outer surface of the flow cell body (2), comprises a plurality of side walls (8), preferably at least four side walls (8), in particular at least six side walls (8), and **in that**, preferably, at least two of the side walls (8), in particular in each case at least two of the side walls (8), are arranged opposite to each other, the side walls (8) are arranged successively one after the other and/or the side walls (8) are arranged around a common axis (CO).

4. Single-use flow cell (1) according to claim 3,
**characterized in that**
at least two of the oppositely arranged side walls (8), in particular all of the oppositely arranged side walls (8), are respectively arranged obliquely and/or at least in pairs parallel to each other and/or **in that** at least two, preferably at least three, further preferably at least four, further preferably at least five, in particular at least six, of the side walls (8) are arranged at least eighth-circular-shaped, preferably quadrant-shaped, further preferably at least semicircular-shaped, in particular circular-shaped relative to each other and, preferably, around the common axis (CO).

5. Single-use flow cell (1) according to anyone of claims 1 to 4,
**characterized in that**
the flow cell body (2) comprises a first flow cell body part (9) and a second flow cell body part (9') and **in that**, preferably, the flow path (3) is formed between the first flow cell body part (9) and the second flow cell body part (9') and/or the first flow cell body part (9) and the second flow cell body part (9') are connected, in particular bonded, to each other.

6. Single-use flow cell (1) according to anyone of claims 1 to 5,
**characterized in that**
the flow cell body (2), in particular the first flow cell body part (9) and/or the second flow cell body part (9'), is at least in sections at least eighth-cylindrical-shaped, preferably quarter-cylindrical-shaped, further preferably at least semicylindrical-shaped, in particular cylindrical-shaped, and, preferably comprises at least on cylinder axis (CY), and/or **in that** the flow cell body (2), in particular the first flow cell body part (9) and/or the second flow cell body part (9'), is at least in sections, preferably completely, polyhedral-shaped.

7. Single-use flow cell (1) according to anyone of claims 1 to 6,
**characterized in that**
the flow cell body (2) comprises a third flow cell body part (9") and **in that**, preferably, the flow path (3) is formed at least in sections inside the third flow cell body part (9") and/or the third flow cell body (9") is arranged, in particular bonded, at least in sections inside the flow cell body (2), preferably between the first flow cell body part (9) and the second flow cell body (9').

8. Single-use flow cell (1) according to anyone of claims 1 to 7,
**characterized in that**
the flow path (3) is formed at least in sections by a first flow path element (10) of the flow cell body (2), wherein preferably the first flow path element (10) is a groove or a flat surface section, and at least in sections by a second flow path (10') element of the flow cell body (2), wherein preferably the second flow path element (10') is a groove or a flat surface section, and **in that**, preferably, the first flow path element (10) and the second flow path element (10') adjoin each other and/or are arranged opposite to each other.

9. Single-use flow cell (1) according to anyone of claims 1 to 8,
**characterized in that**
the flow path (3) and the excitation radiation direction (E), the common axis (CO) and/or the cylinder axis (CY) at least in sections, in particular when adjoining and/or intersecting each other, run oblique and/or substantially parallel to each other.

10. Detection device (17) for the detection of scattered radiation of a multiangle light scattering measurement, comprising:
- a detection unit for the detection of scattered radiation of a multiangle light scattering measurement, preferably comprising at least one detector (13) for the detection of scattered radiation of a multiangle light scattering measurement, and
- a flow cell section (27) for the interaction, in particular reception, of at least one flow cell (1),
**characterized in that**
the detection device (17) comprises a power interface (20), in particular a power connection element, for the connection to an external power supply unit (21).

11. Detection device (17) according to claim 10,
**characterized in that**
the detection device (17) comprises at least one radiation element (18) for providing excitation radiation for a multiangle light scattering measurement and, preferably, the radiation element (18) comprises at least one radiation source, in particular at least one laser, and/or at least one optical fiber (12) and/or that the detection device (17) comprises a radiation interface, in particular a radiation connection element, for the connection to an external radiation source, in particular external laser.

12. Detection device (17) according to claim 10 or claim 11,
**characterized in that**
the flow cell section (27) comprises at least one flow cell holder for the, preferably detachable, connection of a flow cell (1) and/or **in that** the detection device (17) comprises a flow cell (1) and the flow cell (1) is, preferably inseparably, connected to the detection device (17), in particular in the flow cell section (27).

13. Electronics device (19) for the use in a multiangle light scattering measurement comprising:
- a power supply unit (21) for supplying power to at least one detection device (17) for the use in a multiangle light scattering measurement,
- a control unit (22) for controlling at least one detection device (17) for the use in a multiangle light scattering measurement, preferably for controlling at least one radiation element (18) and/or at least one detector (13) for the use in a multiangle light scattering measurement, and
- at least one transfer interface (25), preferably at least one transfer connection element, for transferring power and/or at least one control signal to at least one detection device (17) for the use in a multiangle light scattering measurement.

14. Electronics device (19) according to claim 13,
**characterized in that**
the electronics device (19) comprises at least one radiation element (18'), preferably comprising at least one radiation source, for providing excitation radiation for a multiangle light scattering measurement and, preferably, the transfer interface (25), preferably the transfer connection element, is designed for transferring excitation radiation of the radiation element (18'), preferably of the radiation source, to at least one detection device (17) for the use in a multiangle light scattering measurement.

15. System (15) for the use in, in particular for performing, a multiangle light scattering measurement, comprising:
at least one flow cell (1) for the use in a multiangle light scattering measurement, in particular at least one single-use flow cell (1) according to anyone of claims 1 to 9, at least one detection device (17) for the detection of scattered radiation of a multiangle light scattering measurement, in particular at least one detection device (17) according to anyone of claims 10 to 12, and/or at least one electronics device (19) for the use in a multiangle light scattering measurement, in particular at least one electronics device (19) according to anyone of claims 13 to 14.

16. System (15) according to claim 15,
**characterized in that**
the system (15) comprises a frame (28), preferably having a grid structure comprising several grid sections (29), and **in that** the flow cell (1), the detection device (17) and/or the electronics device (19) is connectable to the frame (28), in particular receivable by at least one grid section (29) of the grid structure.

17. System (15) according to claim 15 or claim 16,
**characterized in that**
the flow cell (1), the detection device (17) and/or the electronics device (19) are, preferably in a detachable manner, connectable with each other and/or **in that** the system (15) comprises at least one transfer element, in particular transfer cable (26), for transferring power, excitation radiation, at least one signal and/or data between the electronics device (19), the detection device (17), the flow cell (1) and/or the frame (28), in particular the grid structure.

18. System (15) according to anyone of claims 15 to 17,
**characterized in that**
the flow cell (1) can be coupled, preferably via at least one optical fiber (12), to at least one detector (13) for the detection of scattered radiation of a multiangle light scattering measurement of the detection device (17) for transmitting scattered radiation of a multiangle light scattering measurement and/or **in that** the flow cell (1) can be coupled, preferably via at least one optical fiber (12), to at least one radiation element (18, 18'), in particular at least one radiation source, for providing excitation radiation for a multiangle light scattering measurement of the detection device (17) and/or the electronics device (19) for transmitting excitation radiation used for a multiangle light scattering measurement.

19. System (15) according to anyone of claims 15 to 18,
**characterized in that**
the detector (13) for the detection of scattered radiation of a multiangle light scattering measurement of the detection device (17) is aligned with the direction of the surface normal of a side wall (8) of the flow cell (1), preferably arranged opposite of the detector (13), and/or **in that** the plurality of detectors (13) for the detection of scattered radiation of a multiangle light scattering measurement of the at least on detection device (17) are arranged at least quadrant-shaped, preferably at least semicircular-shaped, in particular circular-shaped, relative to, in particular around, the flow cell (1).

20. System (15) according to anyone of claims 15 to 19,
**characterized in that**
the radiation element (18, 18'), preferably the radiation source, in particular the laser, of the detection device (17) and/or electronics device (19) defines a radiation direction, wherein along the radiation direction excitation radiation for a multiangle light scattering measurement is emitted and **in that** the radiation direction and the flow path (3) at least in sections, in particular when adjoining and/or intersecting each other, run oblique and/or substantially parallel to each other.
